# EUROPÄISCHE PATENTSCHRIFT

(11) **EP 4 360 454 B1**
(45) Veröffentlichungstag und Bekanntmachung des Hinweises auf die Patenterteilung: **05.11.2025**
(21) Anmeldenummer: 23196863.7
(22) Anmeldetag: 12.09.2023
(51) Int. Cl.: A01K 63/00

(54) **HABITAT FÜR REPTILIEN UND/ODER AMPHIBIEN UND/ODER ARTEN DER WIRBELLOSEN TIERE, UMFASSEND EINEN EIN AUFNAHMEVOLUMEN DEFINIERENDEN PORTABLEN AUFNAHMEKÖRPER**
HABITAT FOR REPTILES AND/OR AMPHIBIANS AND/OR SPECIES OF INVERTEBRATE ANIMALS, COMPRISING A PORTABLE RECEIVING BODY DEFINING A VOLUME
HABITAT POUR REPÉTIRIENS ET/OU AMPHIBIES ET/OU ESPÈCES D'ANIMAUX INVERTÉBRÉS COMPRENANT UN RÉCEPTACLE PORTABLE DÉFINISSANT UN VOLUME

(30) Priorität: 19.09.2022 DE 102022123945
(43) Veröffentlichungstag der Anmeldung: 01.05.2024
(73) Patentinhaber: Trautner, Jürgen, 72631 Aichtal (DE)
(72) Erfinder: Trautner, Jürgen, 72631 Aichtal (DE); Mayer, Johannes, 72631 Aichtal (DE); Rall, Sebastian, 92224 Amberg (DE)
(74) Vertreter: Hafner & Kohl PartmbB

(56) Entgegenhaltungen:
- EP-A1- 3 868 201
- GB-A- 2 349 786
- GB-A- 2 488 313
- US-A- 4 122 800
- US-A1- 2004 069 238

## Beschreibung

Habitat für Reptilien und/oder Amphibien und/oder Arten der wirbellosen Tiere, umfassend einen ein Aufnahmevolumen definierenden portablen Aufnahmekörper.

Die Erfindung betrifft ein Habitat für Reptilien und/oder Amphibien und/oder Arten der wirbellosen Tiere, umfassend einen ein Aufnahmevolumen definierenden portablen Aufnahmekörper, wobei Reptilien und/oder Amphibien und/oder Arten der wirbellosen Tiere das Habitat als Lebensraum nutzen sollen. Es ist bekannt, eigens hierfür vorgesehene Landschaftsabschnitte zur Ansiedlung von Reptilien und/oder Amphibien sowie Arten der wirbellosen Tiere umzugestalten und/oder vor einem menschlichen oder vor einem, gezielte Tiere betreffenden tierischen Zugriff zu bewahren, damit sich eine definierte Zieltierart, z. B. Reptilien oder Amphibien möglichst ungestört und damit möglichst erfolgreich ansiedeln und ggf. vermehren können. Entsprechende Habitate sind in Form von abgezäunten Flächen oder gar in Form von eigens hierfür geschaffenen Bauwerken oder Nisthilfen aus dem Stand der Technik dem Grunde nach bekannt.

Die Europäische Patentanmeldung EP 3 868 201 A1 offenbart eine transportfähige Mastwanne zum Einsatz bei der Zucht von flugunfähigen Insekten.

Der Erfindung liegt die Aufgabe zugrunde, ein Habitat für Reptilien und/oder Amphibien und/oder Arten der wirbellosen Tiere anzugeben, welches insbesondere im Hinblick auf eine einfache und schnelle sowie kostengünstige Weise die Schaffung eines Habitats an einem bislang nicht geeigneten Nutzungsort oder in Kombination mit einem solchen ermöglicht. Bevorzugt soll das Habitat eine hohe Attraktivität für das Zieltier aufweisen. Schließlich kann als optionale Aufgabe vorgesehen sein, dass ein gezielter Attraktivitätsverlust bzw. eine Minderung der Akzeptanz des Habitats auf schonende Weise für Reptilien und/oder Amphibien und/oder Arten der wirbellosen Tiere auf einfache, komfortable und tierwohlverträgliche Weise ermöglicht wird, insbesondere um nachgelagert eine andere Nutzung oder eine Nutzung an anderer Stelle vorzubereiten.

Die Aufgabe wird durch Habitat für Reptilien und/oder Amphibien und/oder Arten der wirbellosen Tiere gemäß Anspruch 1 gelöst. Die hierzu abhängigen Ansprüche betreffen mögliche Ausführungsformen des Habitats. Ferner wird die Aufgabe durch ein Verfahren nach einem der Ansprüche 10 bis 13 gelöst.

Die Erfindung betrifft ein Habitat umfassend einen ein Aufnahmevolumen definierenden portablen bzw. mobilen Aufnahmekörper, wobei im bestimmungsgemäßen Gebrauch des Habitats in dem Aufnahmevolumen des Aufnahmekörpers zumindest abschnittsweise, insbesondere vollständig, ein Füllmaterial aufgenommen ist. Mit anderen Worten ist der Aufnahmekörper eingerichtet, insbesondere im mit dem Füllmaterial befüllten Zustand, einen auf natürliche Gegebenheiten und/oder Bedürfnisse der Reptilien und/oder Amphibien sowie Arten der wirbellosen Tiere - wie beispielsweise Insekten - angepassten Lebensraum auszubilden, wobei der Aufnahmekörper eingerichtet ist, im mit Füllmaterial befüllten Zustand von einem Herstellungsort zu einem Nutzungsort transportiert zu werden. Dies ermöglicht es den Aufnahmekörper nebst dem Füllmaterial an einem ersten Ort, z. B. dem Herstellort, zu lagern und nach einer gewissen Verweildauer zu dem Bestimmungsort des Habitats bzw. zu dem Nutzungsort zu verbringen. Durch die Lagerung und den zeitlichen Verlauf des in dem Aufnahmekörper gelagerten Füllmaterials kann (a) auf zumindest Teile des Füllmaterials gezielt eingewirkt werden und/oder (b) ein zumindest teilweise natürlicher und/oder ein zumindest teilweise künstlicher biologischer und/oder chemischer Prozess aktiv und/oder passiv vollzogen werden, um ein für eine definierte Zieltierart, insbesondere für Reptilien und/oder Amphibien sowie Arten der wirbellosen Tiere (insbesondere Insekten) attraktives bzw. ansprechendes Habitat zu schaffen. Ferner weist das mobile Habitat einen Aufnahmekörper auf, welcher es ermöglicht eine Flüssigkeit aufzunehmen und zu halten, insbesondere um gezielt ein Verlassen der Zieltierarten, insbesondere Reptilien, zu initiieren. Optional ist es möglich, dass der Aufnahmekörper eingerichtet ist, dass eine in diesem aufgenommene Flüssigkeit gesteuert abgebbar ist, z. B. weist der Aufnahmekörper ein Ventil oder ein Verschlussmittel auf, welches temporär verschließbar und temporär öffenbar ist, um bedarfsweise durch Öffnen des Verschlussmittels eine in dem Aufnahmekörper aufgenommene Flüssigkeit abzulassen bzw. abzugeben. Die zumindest temporäre Fähigkeit der Aufnahme einer Flüssigkeit in dem Aufnahmevolumen des Aufnahmekörpers kann dabei beispielsweise bedeuten, dass die Eigenschaft des Aufnehmens einer Flüssigkeit und die Eigenschaft eines nicht Aufnehmens einer Flüssigkeit oder eines nicht Haltens einer Flüssigkeitsmenge (z. B. nach einem Regen) durch ein Stellmittel manuell und/oder automatisiert gesteuert werden kann oder steuerbar ist. Damit kann vermittels des Stellmittels zwischen einem Halten-Zustand und einem nicht-Halte-Zustand geschalten werden.

Dadurch, dass der Herstellungsprozess, d. h. z. B. eine Veränderung des Füllmaterials hin zu einem für eine Zieltierart attraktives Biotop bzw. attraktive Struktur, an einem in der Regel nicht dem Nutzungsort entsprechenden Ort - dem Herstellungsort - erfolgen kann, kann die Nutzung des Nutzungsorts eine geringere Beeinträchtigung erfahren, da während der Zeit des Erzeugens des Biotops das Habitat am Herstellungsort verbleibt. Damit kann der Herstellungsort der Ort der Herstellung und/oder Montage des Aufnahmekörpers sein. Es ist jedoch auch möglich, dass der Aufnahmekörper an einem ersten Ort montiert oder hergestellt wird und an einem weiteren Ort mit Füllmaterial befüllt und/oder gelagert wird, bevor der Aufnahmekörper samt des in dem Aufnahmekörper aufgenommenen Füllmaterials an den Nutzungsort bzw. den Bestimmungsort des Habitats verbracht wird. Hierbei kann beispielsweise der erste Ort und/oder der weitere Ort als Herstellungsort verstanden werden und bildet damit eine Abgrenzung zum Nutzungsort des Habitats.

Das Habitat zeichnet sich dadurch aus, dass der Aufnahmekörper eingerichtet ist, das Aufnahmevolumen flüssigkeitsdicht zu umschließen, sodass zumindest temporär eine Flüssigkeit in dem Aufnahmevolumen des Aufnahmekörper aufnehmbar ist. Mit anderen Worten bildet der Aufnahmekörper zumindest abschnittsweise ein Aufnahmevolumen aus, in welchem zumindest temporär eine Flüssigkeit aufgenommen werden kann, da der Aufnahmekörper das Aufnahmevolumen flüssigkeitsdicht umschließt. Unter flüssigkeitsdicht ist hierbei zu verstehen, dass der Aufnahmekörper durch dessen Beschaffenheit eingerichtet ist, eine in das Aufnahmevolumens eingebrachte Flüssigkeit zumindest teilweise, bevorzugt überwiegend, besonders bevorzugt gänzlich, in dem Aufnahmevolumen zu halten bzw. dessen unerwünschtes Abfließen zu verhindern.

Dadurch, dass der Aufnahmekörper zumindest temporär eine flüssigkeitsdichte bzw. ein eine Flüssigkeit haltende Eigenschaft aufweisende Beschaffenheit aufweist, kann es ermöglicht werden, dass selbst bei ungewollter Flutung der Umgebung (unterhalb eines oberen Randes des Aufnahmekörpers), z. B. steigendem Grundwasserspiegel, es nicht zu einer Flutung des Aufnahmevolumens kommt, da dessen Inhalt vor dem äußerlich, insbesondere von unten, eindringenden Wasser geschützt ist.

Die in das Aufnahmevolumen natürlich (z. B. durch Regenfall) und/oder künstlich eingebrachte Flüssigkeit kann beispielsweise Wasser umfassen. Die Flüssigkeitsdichtheit des Aufnahmevolumens kann beispielsweise dadurch erreicht werden, dass zumindest ein Teilabschnitt des Aufnahmekörpers abschnittsweise, insbesondere vollständig, flüssigkeitsdicht ausgebildet ist, d. h. z. B., dass zumindest ein Teilabschnitt des Aufnahmekörpers wannenartig ausgebildet ist, sodass in dem Innenraum der zumindest abschnittsweise wannenartigen Aufnahme eine Flüssigkeit gehalten werden kann.

Es ist möglich, dass der Aufnahmekörper eine verschließbare Ablassöffnung aufweist, welche ein zumindest überwiegendes, bevorzugt ein vollständiges, Ablassen einer in dem Aufnahmevolumen des Aufnahmekörpers aufgenommenen Flüssigkeit ermöglicht. Mit anderen Worten weist der Aufnahmekörper im Bereich des im bestimmungsgemäßen Gebrauch des Aufnahmekörpers, d. h. während dessen Platzierens am Nutzungsort, die Flüssigkeit aufnehmenden Abschnitts eine verschließbare Ablassöffnung auf. Die Ablassöffnung kann beispielsweise eine Bohrung bzw. einen Durchbruch aufweisen, welche resp. welcher zumindest temporär derart mit einem Verschluss verschließbar ist, dass durch die Ablassöffnung im bestimmungsgemäßen Betrieb des Habitats keine Flüssigkeit austreten kann. Damit kann der Verschluss grundsätzlich eine Öffnung aufweisen, jedoch ist diese dann derart angeordnet oder ausgebildet, dass die Flüssigkeit nicht aus dem Aufnahmevolumen über die Ablassöffnung austreten kann. Der Verschluss kann beispielsweise kraft- und/oder formschlüssig an dem Aufnahmekörper bzw. an der Ablassöffnung verbunden werden. Hierbei kann es sich beispielsweise als zweckmäßig erweisen, wenn ein Dichtelement zur Abdichtung der Trennfläche zwischen dem Verschluss und dem Aufnahmebereich bzw. der Ablassöffnung verwendet wird.

Das Habitat zeichnet sich dadurch aus, dass der Aufnahmekörper einen Wandungsabschnitt zur zumindest abschnittsweisen Ausbildung des Aufnahmevolumens umfasst, wobei zumindest ein Wandungsteilabschnittabschnitt bewegbar oder lösbar an wenigstens einem weiteren Wandungsabschnitt und/oder einem Bodenabschnitt des Aufnahmekörpers verbunden ist. Ein Wandungsabschnitt kann beispielsweise zumindest abschnittsweise als geradlinige oder gekrümmte Wandung ausgebildet sein. So kann der Aufnahmekörper beispielsweise eine quaderförmige Grundform aufweisen, welche einen als Boden ausgebildeten Bodenabschnitt, z. B. eine Bodenplatte, und sich an den Bodenabschnitt anschließende Wandungsabschnitte umfasst, die zumindest im bestimmungsgemäßen Endmontagezustand das durch den Bodenabschnitt und die Wandungsabschnitte aufgespannte Aufnahmevolumen begrenzen. Mit anderen Worten kann das Habitat einen in seiner räumlich-körperlichen Gestalt durch Wandungen bzw. Wandungsabschnitte definierten Aufnahmekörper bzw. ein durch diesen Aufnahmekörper begrenztes Aufnahmevolumen definieren. Der Aufnahmekörper kann ein- oder mehrteilig ausgeführt sein; in einer mehrteiligen Ausführung umfasst der Aufnahmekörper mehrere Aufnahmekörpersegmente, welche unter Ausbildung des Aufnahmekörpers miteinander verbindbar bzw. verbunden sind. Unabhängig von einer ein- oder mehrteiligen Ausführung umfasst der Aufnahmekörper ein Aufnahmevolumen; hierbei handelt es sich typischerweise um (a) ein durch entsprechende Wandungen bzw. Wandungsabschnitte des Aufnahmekörpers oder um (b) durch in und/oder an den Aufnahmekörper angeordnete Aufnahmekörperteilelemente begrenztes inneres Aufnahmekörpervolumen. Ein Aufnahmekörperteilelement kann beispielsweise eine Folie oder ein andersartiges, insbesondere flexibles und/oder biegeschlaffes, (Flächen-)Element umfassen, das im Endmontagezustand des Aufnahmekörpers zumindest teilweise zur Bildung des flüssigkeitsdichten Aufnahmevolumens eingesetzt wird.

Zur Ausbildung einer verschließbaren oder nicht wieder verschließbaren Ablassöffnung ist ein Wandungsteilabschnitt als Klappe oder als lösbarer Wandungsteilabschnitt ausgebildet. Beispielsweise ist ein klappenartig ausgebildeter Wandungsteilabschnitt über ein Scharnier oder über einen, insbesondere linearen, Zentrier- und/oder Führungsabschnitt (z. B. Schiene) mit einem weiteren Wandungsabschnitt und/oder mit einem Bodenabschnitt des Aufnahmekörpers verbunden. Insbesondere kann ein Wandungsabschnitt über ein Scharnier an dem Bodenabschnitt beweglich gelagert sein. Bevorzugt ist dieser beweglich gelagerte Wandungsabschnitt zumindest in seiner Schließstellung fixierbar bzw. arretierbar. Vorzugsweise kann der beweglich gelagerte Wandungsabschnitt in seiner Offenstellung und/oder in definierten Zwischenpositionen des Wandungsabschnitts zwischen einer Offenstellung und einer Schließstellung fixierbar bzw. arretierbar sein.

Der Aufnahmekörper kann beispielsweise eine Überlaufeinrichtung aufweisen, die eingerichtet ist, die ein vordefiniertes Volumen übersteigende, in dem Aufnahmevolumen aufgenommene Flüssigkeit abzuführen. Mit anderen Worten kann das mobile Habitat bzw. das Aufnahmevolumen mit einem Überlauf bzw. einer Überlaufeinrichtung versehen sein, welche das Volumen an in dem Aufnahmevolumen aufgenommenen Flüssigkeit begrenzt bzw. ein über einem Volumenschwellwert bzw. über einer Pegelhöhe liegende Flüssigkeit, vorzugsweise in die Umwelt, abführt. Hierzu kann das Aufnahmevolumen beispielsweise eine Überlauföffnung aufweisen, welche von den Wandabschnitten des Aufnahmekörpers beabstandet ist. Folglich erfolgt hierbei ein Abfluss von überschüssiger Flüssigkeit nicht durch ein Übertreten der Flüssigkeit über oberseitige Begrenzungen oder Durchbrüche des wenigstens einen Wandabschnitts, sondern durch eine Abführung der Flüssigkeit durch eine in dem Bodenabschnitt liegenden Durchtrittsöffnung, wobei sich ein Abführkanal von einer Überlauföffnung zu einer Durchtrittsöffnung erstrecken kann, sodass nach Eintritt der Flüssigkeit in die Überlauföffnung, diese über den Abführkanal zu der bodenabschnittsseitigen Durchtrittsöffnung geführt wird und dort das Aufnahmevolumen bzw. das durch den Aufnahmekörper gebildete Volumen verlässt. Selbstverständlich kann alternativ oder zusätzlich wenigstens ein Abführkanal von einer innerhalb des Aufnahmevolumens liegenden Überlauföffnung zu einer Durchtrittsöffnung eines Wandabschnitts führen und durch eben diese das Aufnahmevolumen bzw. das durch den Aufnahmekörper gebildete Volumen verlassen.

In einer optionalen Weiterbildung kann es zweckmäßig sein, dass die Überlaufeinrichtung hinsichtlich des Schwellwerts für das Fassungsvolumen des Aufnahmevolumens, ab welchem ein Überlauf der überschüssigen Flüssigkeit erfolgt, veränderbar ist. Hierbei kann die Überlauföffnung der Überlaufeinrichtung in einer veränderbaren Höhe relativ zu einem tiefsten Punkt des Aufnahmevolumens platzierbar bzw. arretierbar sein. Beispielsweise ist der einendseitig die Ablauföffnung aufweisende Abführkanal in seiner Länge veränderbar, insbesondere teleskopierbar, ausgebildet. Je nach Einstellung der Höhe der Überlauföffnung relativ zu dem tiefsten Punkt des Aufnahmevolumens kann das maximale Volumen der in dem Aufnahmevolumen aufnehmbaren Flüssigkeit eingestellt bzw. variiert werden.

Der Aufnahmekörper kann beispielsweise zumindest abschnittsweise, insbesondere vollständig, aus Metall, bevorzugt zumindest abschnittsweise, insbesondere aus Aluminium oder Stahl, ausgebildet sein. Bevorzugt ist der Aufnahmekörper als kastenartiger Körper aus Metall, insbesondere Stahl, ausgebildet, wobei die Kantenstruktur, z. B. in Form einer Stabstruktur, des Aufnahmekörpers aus stabförmigen Metallelementen, insbesondere Stahlelementen, ausgebildet sein kann. Alternativ oder zusätzlich können flächige Wand- und/oder Bodenabschnitte des Aufnahmekörpers als flächige Metallelemente, insbesondere Stahlelemente, ausgebildet sein. Für einen aus Metall, insbesondere aus Stahl, ausgebildeten Aufnahmekörper kann es beispielsweise vorgesehen sein, dass dieser aus mehreren stoff- und/oder form- und/oder kraftschlüssig miteinander verbundenen Metallelementen bzw. Stahlelementen ausgebildet ist. Bevorzugt kann ein Verschweißen und/oder ein Verschrauben und/oder ein Vernieten von Metallelementen zur Ausbildung des Aufnahmekörpers eingesetzt werden.

Beispielsweise ist der Aufnahmekörper aus einem witterungsbeständigen Material ausgebildet, sodass der Aufnahmekörper an einen ersten Ort in der Natur, insbesondere auf einem Erdboden, abgesetzt werden kann und nach einem Zeitraum, z. B. nach mindestens 2 Wochen, bevorzugt nach mindestens 4 Wochen, besonders bevorzugt nach mindestens 3 Monaten, höchst bevorzugt nach mindestens 12 Monaten, sich keine oder keine Wesentliche, eine Tragfunktion des Aufnahmekörpers für das Tragen des in ihm aufgenommenen Materials beeinträchtigende Veränderung des Aufnahmekörpers sich ergibt. Mit anderen Worten ist der Aufnahmekörper, und insbesondere das zu seiner Herstellung verwendete Material, derart gewählt bzw. ausgebildet, dass dieser im mit Material befüllten Zustand an einen ersten Nutzungsort absetzbar ist und nach einem Zeitraum (s. z. B. oben) im mit Füllmaterial befüllten Zustand angehoben werden kann. Durch dieses Anheben und Verlagern kann der mit Füllmaterial gefüllte Aufnahmekörper zu einem weiteren Absetzort für einen dortigen, erneuten Einsatz als mobiles Habitat für eine Zieltierart verlagert und eingesetzt werden.

Der Aufnahmekörper kann beispielsweise eine Wiederverwendbarkeit aufweisen, sodass dieser in einer zeitlichen Abfolge an unterschiedlichen Nutzungsorten abgesetzt werden kann, um dort jeweils als Habitat verwendet zu werden. Dazu weist der Aufnahmekörper eine Witterungsbeständigkeit auf und zugleich eine Stabilität bzw. eine (Dauer-)Festigkeit, sodass ein mehrfaches Umsetzen im zeitlichen Verlauf ermöglicht wird.

Der Aufnahmekörper kann beispielsweise wenigstens ein Anschlussmittel als Schnittstelle zur Verbindung mit einem Hebezeug, insbesondere einem Anschlagmittel eines Hebezeugs, umfassen, um den Aufnahmekörper vermittels des Anschlussmittels bzw. vermittels des Hebezeugs zu heben und/oder zu bewegen. Das wenigstens eine Anschlussmittel kann beispielsweise als Öse ausgebildet sein, welche als Angriffspunkt eines Hebezeugs bzw. eines Anschlagmittels eines Hebezeugs dienen kann. So kann z. B. ein als Seil, Kette, Hebeband, Hebegurtschlinge, Rundschlinge, Schäkel oder Wirbel ausgebildetes Anschlagmittel mit der Öse verbunden werden, um den Aufnahmekörper mit einem Hebezeug, insbesondere mit einem Kran zu verbinden. Folglich kann das Hebezeug, insbesondere der Kran, über dessen Verbindung mit dem wenigstens einen Anschlussmittel zum Umsetzen bzw. zum Bewegen des mit dem Füllmaterial und/oder mit einer Flüssigkeit befüllten Aufnahmekörpers verwendet werden.

In einer bevorzugten Weiterbildung kann es vorgesehen sein, dass der Aufnahmekörper einen Wandungs- und/oder Wandungsteilabschnitt und/oder Bodenabschnitt zur Ausbildung des Aufnahmevolumens umfasst, wobei das Anschlussmittel in oder an einem Wandungs- und/oder Wandungsteilabschnitt und/oder Bodenabschnitt angeordnet oder ausgebildet ist. Beispielsweise können zwei oder mehr, insbesondere vier, Anschlussmittel an dem Bodenabschnitt des Aufnahmekörpers angeordnet oder ausgebildet sein. Hierbei können die Anschlussmittel z. B. als Ösen ausgebildet sein, welche an einen Bodenabschnitt des Aufnahmekörpers angeschweißt sind. Insbesondere können mehrere Anschlussmittel symmetrisch zum Aufnahmekörper, insbesondere punktsymmetrisch zu einem Schwerpunkt des Aufnahmekörpers, angeordnet oder ausgebildet sein.

Der Aufnahmekörper weist eine, insbesondere viereckige, Grundfläche von 1,5 m² bis 32,0 m², bevorzugt von 2,5 m² bis 25,0 m², besonders bevorzugt von 6,0 m² bis 10,0 m², höchst bevorzugt von 7,0 m² bis 9,0 m² auf. Die Grundfläche des Aufnahmekörpers weist mindestens eine der unteren Wertebereichsgrenze als minimale Grundfläche auf, sodass die Grundfläche des Aufnahmekörpers mindestens 1,5 m², bevorzugt mindestens 2,5 m², besonders bevorzugt mindestens 6,0 m², höchst bevorzugt mindestens 7,0 m², beträgt. Alternativ oder zusätzlich kann die Grundfläche des Aufnahmekörpers ein, insbesondere regelmäßiges, n-Eck und/oder ein, insbesondere quadratisches, Rechteck, ausbilden. Es ist möglich, dass der Aufnahmekörper ein Aufnahmevolumen mit einem Fassungsvolumen zur zumindest temporären Aufnahme einer Flüssigkeit von mindestens 0,40 m³, bevorzugt von mindestens 1,5 m³, besonders bevorzugt von mindestens 2,5 m³, höchst bevorzugt von mindestens 2,9 m³, aufweist. Alternativ oder zusätzlich kann das Fassungsvermögen des Aufnahmevolumens des Aufnahmekörpers zur zumindest temporären Aufnahme einer Flüssigkeit maximal 9,0 m³, bevorzugt maximal 5,0 m³, besonders bevorzugt maximal 3,6 m³, höchst bevorzugt maximal 3,0 m³, betragen. Hierbei kann es vorgesehen sein, dass der Aufnahmekörper und/oder das wenigstens eine Anschlussmittel des Aufnahmekörpers derart ausgebildet sind bzw. ist, dass diese(s) ein Anheben des mit Flüssigkeit und/oder Füllmaterial befüllten Aufnahmekörpers ermöglichen. Insbesondere kann ein Anheben des mit Flüssigkeit und/oder Füllmaterial befüllten Aufnahmekörpers ausführbar sein, ohne dass es hierbei zu einer Wesentlichen Formänderung (d. h. z. B. plastische und/oder elastische Formänderung kleiner 15 %, bevorzugt kleiner 5 %, besonders bevorzugt kleiner 1 %) des Aufnahmekörpers kommt. Mit anderen Worten ist der Aufnahmekörper derart geometrisch ausgebildet, z. B. mit Versteifungsrippen versehen, und/oder zumindest bereichsweise aus entsprechend steifem Material ausgebildet, dass es zu keinen wesentlichen Formänderungen während des Anhebens und der Verlagerungsbewegung kommt.

Der Aufnahmekörper kann beispielsweise die Form eines Quaders aufweisen, wobei (a) die Länge im Bereich von 2,0 m bis 6,0 m, bevorzugt von 3,0 m bis 5,0 m, besonders bevorzugt von 3,5 m bis 4,5 m, und (b) die Breite im Bereich von 0,5 m bis 4,0 m, bevorzugt von 1,0 m bis 3,0 m, besonders bevorzugt von 1,5 m bis 2,5 m, liegen kann.

Ferner ist es möglich, dass die Länge eines, insbesondere quaderförmigen, Aufnahmekörpers mindestens 2,0 m, bevorzugt mindestens 3,0 m, besonders bevorzugt mindestens 3,5 m, beträgt. Alternativ oder zusätzlich kann die Länge eines, insbesondere quaderförmigen, Aufnahmekörpers maximal 6,0 m, bevorzugt maximal 5,0 m, besonders bevorzugt maximal 4,5 m, betragen. Die Breite des Aufnahmekörpers kann, insbesondere im Zusammenhang mit den vorgenannten Längenausprägung, mindestens 0,5 m, bevorzugt mindestens 1,0 m, besonders bevorzugt mindestens 1,5 m, und/oder maximal 4,0 m, bevorzugt maximal 1,0 m, besonders bevorzugt maximal 1,5 m, betragen.

Es ist hierbei möglich, dass die Höhe der das Aufnahmevolumen definierenden Wandabschnitte von der Grundfläche gemessen maximal 1,5 m, bevorzugt maximal 1,1 m, besonders bevorzugt maximal 0,80 m, höchst bevorzugt maximal 0,65 m, weiter bevorzugt maximal 0,55 m, beträgt. Alternativ oder zusätzlich kann die Höhe des das Fassungsvolumen des Aufnahmevolumens definierenden Wandabschnitts (also das Volumen, welches oberseitig durch einen etwaigen Überlauf definiert wird) mindestens 0,25 m, bevorzugt mindestens 0,35 m, besonders bevorzugt mindestens 0,45 m, höchst bevorzugt mindestens 0,50 m, betragen. Die angegebenen Höhen werden jeweils gemessen von der untersten Kante der Konstruktion bzw. von der Aufstellfläche aus. Alternativ kann der Bodenaufbau bzw. die Höhe einer Bodenplatte eine Höhe zum Gesamtaufbau (Höhe der Bodenplatte und Wandabschnitte) von maximal 40 %, bevorzugt von maximal 30 %, besonders bevorzugt von maximal 25 %, betragen. Die Höhe der Bodenplatte zur Höhe des Gesamtaufbaus kann beispielsweise mindestens 5 %, bevorzugt mindestens 15 %, besonders bevorzugt mindestens 25 %, betragen.

Der Aufnahmekörper kann beispielsweise wenigstens eine Anbauschnittstelle zur Verbindung mit einer im bestimmungsgemäßen Gerbrauch des Aufnahmekörpers sich vertikal erstreckenden Baustruktur aufweisen. Bevorzugt kann die Baustruktur beispielsweise mit der Anbauschnittstelle formschlüssig verbunden oder verbindbar sein. Alternativ oder zusätzlich kann die Baustruktur mit der aufnahmekörperseitigen Anbauschnittstelle zumindest ergänzend, insbesondere ausschließlich, kraftschlüssig und/oder stoffschlüssig verbunden oder verbindbar sein. Die Baustruktur kann beispielsweise eine steife Struktureigenschaft aufweisen. So kann in einer beispielhaften Weiterbildung die Baustruktur wenigstens einen mit einem Verbindungselement versehenen Baukörper umfassen, wobei der Baukörper über das Verbindungselement zumindest ergänzend, insbesondere ausschließlich, formschlüssig mit einem am Aufnahmekörper angeordneten oder ausgebildeten Verbindungsmittel zur Ausbildung einer formschlüssigen Verbindung zusammenwirken. So kann beispielsweise das baukörperseitige Verbindungsmittel als Gegenelement zu einem in oder an das Gegenelement ansetzbaren bzw. angesetzten, insbesondere eingreifbaren bzw. eingreifenden, Eingriffselement zusammenwirkend bzw. korrespondierend verbunden werden. So kann der Aufnahmekörper beispielsweise als Verbindungsmittel wenigstens ein sich vertikal erstreckendes Stabelement umfassen, auf welches wenigstens ein mit einer Ausnehmung, insbesondere mit einem Durchbruch, als Verbindungselement versehener Baukörper ansetzbar bzw. auffädelbar ist. Hierbei kann das aufnahmekörperseitige Stabelement in die baukörperseitige Ausnehmung eingreifen. Es ist zu erwähnen, dass das alternativ oder zusätzlich ein baukörperseitiges Stabelement in eine aufnahmekörperseitige Ausnehmung zur Aufnahme des baukörperseitigen Stabelements vorgesehen sein kann. In einer konkreten Ausführungsform können die Baukörper als quaderförmige Elemente, z. B. Steine, ausgebildet sein. Vermittels der quaderförmigen Elemente kann eine Wandscheibe, welche sich, bevorzugt rechtwinklig, zur Grundfläche des Aufnahmekörpers weg erstreckt, gestaltet werden.

Die Baustruktur kann beispielsweise als Mauerwerk oder als eine andersartige spaltartige bzw. poröse Struktur ausgebildet sein. Hierbei kann die Baustruktur als Rückzugsort bzw. Deckungsort für Insekten dienen.

Die Baustruktur kann beispielsweise als, insbesondere scheibenartige, Wand ausgebildet sein. Vorzugsweise kann die, insbesondere scheibenartige, Wand zumindest abschnittsweise, insbesondere vollständig, entlang eines Seitenbereichs des Aufnahmekörpers verlaufen. Es kann beispielsweise eine Mittellängsachse einer, insbesondere scheibenartigen, Wand zumindest teilweise, bevorzugt überwiegend, besonders bevorzugt vollständig, äquidistant zu einem Seiten- bzw. Randbereich eines Aufnahmekörpers verlaufen. Auch kann es beispielsweise vorgesehen sein, dass die insbesondere scheibenartige Wand zumindest abschnittsweise, bevorzugt überwiegend, besonders bevorzugt vollständig, parallel zu einer Längs- und/oder Breitseite des Aufnahmekörpers verläuft.

Die, insbesondere scheibenartige, Wand kann als Wärmespeicher (Erwärmung im Zuge von Sonneneinstrahlung) und/oder als Windschutz und/oder als Sichtschutz und/oder als Unterschlupf im Rahmen des bestimmungsgemäßen Betriebs des Habitats dienen. Damit kann die Wand die Attraktivität bzw. Akzeptanz des Habitats für wenigstens eine Zieltierart, insbesondere für Reptilien oder Amphibien und/oder Arten der wirbellosen Tiere, insbesondere Insekten, erhöhen.

Das in dem Aufnahmevolumen aufgenommene Füllmaterial kann beispielsweise zumindest teilweise, bevorzugt mindestens zu 10 Gew.-%, besonders bevorzugt mindestens zu 20 Gew.-%, höchst bevorzugt mindestens zu 35 Gew.-%, weiter bevorzugt mindestens zu 50 Gew.-%, ein Material aus Tonschiefer, insbesondere aus Porlith, umfassen. Es ist vorteilhaft, wenn das Füllmaterial als Ganzes eine Lagestabilität aufweist, d. h., dass das Füllmaterial durch äußere Einflüsse während des Transports und/oder während einer Witterungseinwirkung nach dem Platzieren des Habitats am Bestimmungsort, keine oder nur eine geringfügige (z. B. maximal um 10 %) Formänderung erfährt. Insbesondere soll die Lagestabilität auch dann vorliegen, wenn das Aufnahmevolumen mit einer Flüssigkeit, z. B. Wasser, geflutet wird. D. h., dass das Füllmaterial zumindest überwiegend auch bei Flutung des Aufnahmevolumens mit Wasser seine Form gänzlich oder zumindest im Wesentlichen (z. B. Formänderung von maximal 10 %) beibehält.

Es hat sich gezeigt, dass beispielsweise Porlith als Bestandteil des Füllmaterials sich vorteilhaft erweist. Porlith ist ein Rohstoff der von dem Unternehmen Gelsenroth Spezialbaustoffe GmbH aus Gelsenkirchen abgebaut und vertrieben wird. Porlith ist ein Tonschiefer der aus dem Umkreis von Messel (Hessen) gewonnen wird und auch unter der Bezeichnung Messeler Tonschiefer bekannt ist. Er bildet eine Mischung aus gebranntem, rotem Tonsteinrückstand sowie porösen lavaartigen Schmelzprodukten. Dabei besteht Porlith überwiegend aus quellfähigen Tonmineralien.

Das in dem Aufnahmevolumen aufgenommene Füllmaterial kann beispielsweise wenigstes eine erste Schicht aufweisen, welche eine Flüssigkeitsaufnahmefähigkeit von mindestens 4 l/m², bevorzugt von mindestens 6 l/m², besonders bevorzugt von mindestens 9 l/m², höchst bevorzugt von mindestens 11 l/m², weiter bevorzugt von mindestens 12 l/m² und/oder eine Flüssigkeitsableitfähigkeit bei einem Gefälle von 2 % von mindestens 1,0 I/(s*m), bevorzugt von mindestens 1,3 I/(s*m), besonders bevorzugt von mindestens 1,4 I/(s*m), höchst bevorzugt von mindestens 1,5 I/(s*m) aufweist. Dabei kann die erste Schicht zumindest ein sogenanntes Drän- und Wasserspeicherelement umfassen. Beispielsweise kann das hierbei eingesetzte wenigstens eine Drän- und Wasserspeicherelement als ein aus einem profilierten Kunststoff gebildeter Einsatz sein, welche in das Aufnahmevolumen eingesetzt und ggf. mit einer Füllung verfüllt wird. Zum Beispiel wird ein Drän- und Wasserspeicherelement aus einem tiefgezogenen Material, insbesondere aus tiefgezogenem RC-Polyolefin, verwendet. Dabei kann das tiefgezogene Material mit einer Vielzahl an Diffusionsöffnungen versehen sein, die Diffusionsöffnungen können beispielsweise einen Öffnungsquerschnitt, insbesondere einen Durchmesser, zwischen 0,5 mm bis 5,0 mm, bevorzugt zwischen 1,0 mm bis 3,0 mm, aufweisen. Die Höhe, d. h. die Höhe senkrecht zu der Haupterstreckungsebene, des Drän- und Wasserspeicherelements kann beispielsweise zwischen 2 cm und 15 cm, bevorzugt zwischen 3 cm und 10 cm, besonders bevorzugt zwischen 4 cm und 8 cm, betragen. Das Drän- und Wasserspeicherelement kann Aufnahmeabschnitte umfassen, in welche ein Schüttgut als Füllung einbringbar ist, z. B. wird als Schüttgut ein, zumindest teilweise, bevorzugt überwiegend, tonhaltiges Material eingebracht. Beispielsweise kann als Schüttgut zur Auffüllung der Aufnahmeabschnitte des Drän- und Wasserspeicherelements das Mineralsubstrat Zincolit^{®} Plus verwendet werden, das von der ZinCo GmbH in Nürtingen bezogen werden kann. Als aus profiliertem Kunststoff gebildetes Drän- und Wasserspeicherelement kann beispielsweise Floradrain^{®} FD 40 und/oder FD 60 eingesetzt werden, welches von der ZinCo GmbH in Nürtigen bezogen werden kann.

Alternativ oder zusätzlich kann das in dem Aufnahmevolumen aufgenommene Füllmaterial wenigstens eine weitere (z. B. dritte) Schicht aufweisen, welche zumindest teilweise Tonschiefer, insbesondere Porlith, enthält.

Sofern das Füllmaterial des Aufnahmevolumens zumindest eine erste und wenigstens eine weitere Schicht (z. B. eine dritte Schicht) aufweist, kann beispielsweise eine zweite Schicht vorgesehen sein, welche zwischen der ersten Schicht und der dritten Schicht angeordnet ist und dabei die erste und die dritte Schicht voneinander trennt. Damit kann die dritte Schicht derart beschaffen sein, dass das die erste und die zweite Schicht bildende Material die dritte Schicht nicht durchdringen kann und damit die Anordnung der ersten und dritten Schicht auch bei Erschütterung des mobilen Habitats oder sonstiger äußerer Einflüsse als voneinander getrennte Schichten erhalten bleibt. Sofern wenigstens drei Schichten vorgesehen sind, kann die den Tonschiefer, insbesondere das Porlith, enthaltende dritte Schicht eine größere Schichtdicke aufweisen als die erste und die zweite Schicht. Es ist möglich, dass die den Tonschiefer, insbesondere das Porlith, enthaltende dritte Schicht zumindest an deren dem Boden abgewandten Endbereich zur Durchwurzelung mit Wurzeln der im mobilen Habitat angeordneten Pflanzen dienen kann. Damit kann dieser dem Boden des Aufnahmevolumens abgewandte Endbereich der dritten Schicht zumindest abschnittsweise als Vegetationsschicht dienen.

Neben dem Habitat betrifft die Erfindung auch ein Verfahren zur Ansiedlung oder Umsiedlung von Reptilien und/oder Amphibien und/oder Arten der wirbellosen Tiere (insbesondere Insekten) umfassend ein Platzieren eines hierin beschriebenen Habitats, an einem Nutzungsort, wobei das Habitat ein von einem Aufnahmekörper gebildetes Aufnahmevolumen umfasst, in welchem zumindest teilweise, insbesondere vollständig, ein Füllmaterial aufgenommen ist und der mit dem Füllmaterial befüllte Aufnahmekörper einen auf natürliche Gegebenheiten und/oder Bedürfnisse der Reptilien und/oder Amphibien und/oder Arten der wirbellosen Tiere (insbesondere Insekten) angepassten Lebensraum ausbildet.

Das Befüllen des Aufnahmevolumens des Habitats mit einer Flüssigkeit kann beispielsweise derart erfolgen, dass das Aufnahmevolumen zumindest teilweise, bevorzugt überwiegend, besonders bevorzugt vollständig, mit der Flüssigkeit gefüllt ist. Das Befüllen des Aufnahmevolumens mit Flüssigkeit findet bevorzugt am Nutzungsort statt, d. h. der Aufnahmekörper wird an den Nutzungsort verbracht und ggf. etwaige Öffnungen, welche zu einem Abfließen von in das Aufnahmevolumen eingebrachten Flüssigkeit führen würden, verschlossen. Anschließend erfolgt ein Befüllen des Aufnahmevolumens mit einer Flüssigkeit, insbesondere vermittels Wasser.

Ein Verschließen einer verschließbaren Ablassöffnung des Aufnahmekörpers kann beispielsweise vor oder während dem Befüllen des Aufnahmevolumens des Habitats mit der Flüssigkeit erfolgen. Außerdem kann das Befüllen des Aufnahmevolumens des Habitats beispielsweise nach dem Platzieren des Habitats an dem Nutzungsort erfolgen.

Es ist möglich, dass vor dem Platzieren des Habitats an dem Nutzungsort das Habitat an einem Herstellungsort mit Füllmaterial befüllt wird. Ferner kann beispielsweise ein Anwachsen von biologischem Material in oder an dem Füllmaterial an dem Herstellungsort erfolgen, wobei zeitlich später das mit dem angewachsenen biologischen Material versehene Habitat von dem Herstellungsort an den Nutzungsort verbringbar bzw. verbracht wird. Das biologische Material kann beispielsweise lebende Pflanzen umfassen, welche das Füllmaterial bilden bzw. in oder an einem, Teil des Füllmaterials bildenden Substrat, insbesondere humusreichem Substrat, wachsen.

In einer weiteren optionalen Weiterbildung kann es vorgesehen sein, dass ein Aufbau einer Baustruktur an dem Aufnahmekörper durch eine zumindest formschlüssige Verbindung eines Baukörpers der Baustruktur über ein baukörperseitiges Verbindungselement mit einem aufnahmekörperseitig angeordneten oder ausgebildeten Verbindungsmittel erfolgt. Bevorzugt erfolgt der Aufbau der Baustruktur an dem Aufnahmekörper nach einem Platzieren des Habitats an einem Nutzungsort. Das baukörperseitige Verbindungselement und/oder das aufnahmekörperseitige Verbindungsmittel kann beispielsweise unlösbar bzw. nicht zerstörungsfrei trennbar an dem Baukörper bzw. an dem Aufnahmekörper verbunden oder verbindbar sein. Das Verbindungsmittel und/oder das Verbindungselement kann vor, während oder nach dem Platzieren des Aufnahmekörpers an dem Nutzungsort an dem Aufnahmekörper bzw. an dem Baukörper befestigt bzw. mit diesem verbunden werden.

Die hierin beschriebene Vorrichtung zur Ausbildung des Habitats, insbesondere der Aufnahmekörper und zumindest teilweise, bevorzugt überwiegend, besonders bevorzugt vollständig, das Füllmaterial das vorliegend zur Ausbildung des Habitats beschrieben ist, kann auch als Ludervorrichtung eingesetzt werden, wobei sonach als Füllmaterial unter anderem zumindest ein totes Tier verwendet wird. Ein in dem Aufnahmekörper aufgenommenes totes Tier kann zum Anlocken und/oder zum Füttern von Zieltieren, z. B. von Beutegreifern, verwendet werden. Beispielsweise können damit Vögel angelockt und/oder gefüttert werden, wie beispielsweise Geier, Rotmilane und andere Beutegreifer. Auch in der Nutzung der Vorrichtung bzw. des Aufnahmekörpers und des Füllmaterials zur Ausbildung einer Ludervorrichtung kann es vorteilhaft sein, das tote Tier und das weitere Füllmaterial an einem vom Bestimmungsort beabstandeten Ort in den Aufnahmekörper aufzunehmen, mit dem Aufnahmekörper an den Bestimmungsort zu verlagern und dort auf- bzw. abzustellen. So ist es möglich, dass in einer vom Bestimmungsort entfernten, geschützten Umgebung ein Habitat für mit dem toten Tier in Verbindung stehenden weiteren Tieren, z. B. Aaskäfern, geschaffen werden kann. Dieses Habitat für Aaskäfer kann sodann an den Bestimmungsort verbracht und dort auf- bzw. abgestellt werden.

Beispielsweise wird als totes Tier wenigstens ein totes Säugetier, z. B. eine Kuh, als Bestandteil des Füllmaterials zur Bildung des Habitats bzw. der Ludervorrichtung verwendet.

Grundsätzlich kann verwesendes Aas in der freien Landschaft hygienische Probleme bergen, wenn beispielsweise Krankheitserreger in das Grundwasser gelangen. Dadurch, dass die Ludervorrichtung bzw. die Vorrichtung zur Ausbildung des Habitats bzw. das Habitat eine flüssigkeitsdichte Wanne bzw. einen flüssigkeitsdichten Innenraum ausbildet, welcher geeignet ist, aufgenommene Flüssigkeiten zu halten, kann das Eindringen von in dem Aufnahmekörper befindlichen Flüssigkeiten in die Aufstellfläche vermieden werden oder zumindest reduziert werden. Allgemein verbessert das Verbleiben von Kadavern in der freien Landschaft die Biodiversität, sodass die vorliegende Ludervorrichtung und/oder das Habitat eine Möglichkeit bildet, eine Reduzierung der Gefahren, welche mit dem Platzieren von toten Tieren in der Natur verbunden sind einzugrenzen. Auch kann die Ludervorrichtung selbst als Habitat angesehen werden für die Tiere, die direkt oder indirekt von Aas leben oder Nutzen aus dem Toten Tier ziehen können. Beispielsweise können Aaskäfer (z. B. Käfer der Art Nicrophorus vespilloides) das tote Tier bzw. den Kadaver als Brutstätte für deren Larven verwenden.

Sämtliche Vorteile, Einzelheiten, Ausführungen und/oder Merkmale des erfindungsgemäßen Habitats sind auf das erfindungsgemäße Verfahren übertragbar bzw. anzuwenden.

Die Erfindung ist anhand von Ausführungsbeispielen in den Zeichnungen näher erläutert. Dabei zeigt:
Fig. 1 eine perspektivische Prinzipdarstellung eines Habitats gemäß einem Ausführungsbeispiel;
Fig. 2 eine perspektivische Prinzipdarstellung eines mit einer Baustruktur versehenen Habitats gemäß einem Ausführungsbeispiel;
Fig. 3 eine Prinzipdarstellung in der Seitenansicht des Habitats gemäß Figur 2;
Fig. 4 eine Prinzipdarstellung einer Seitenansicht auf das Habitats gemäß Figur 2;
Fig. 5 eine Prinzipdarstellung einer Draufsicht auf das Habitat gemäß Figur 2;
Fig. 6 eine Prinzipdarstellung des Aufbaus des in dem Aufnahmevolumen aufgenommenen Füllmaterials gemäß einem Ausführungsbeispiels.

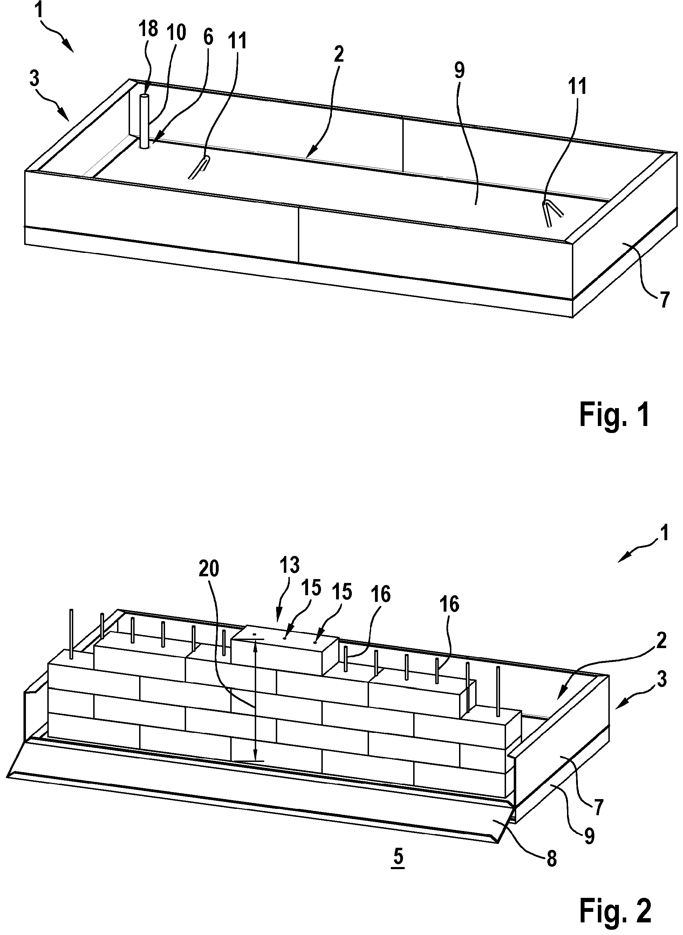

In den Figuren 1 bis 5 sind leere Habitate 1 gezeigt, also Habitate 1, welche weder mit einer Flüssigkeit noch mit einem Füllmaterial 4 befüllt sind. Das Habitat 1 soll als Lebensraum oder zumindest als Unterschlupf für Reptilien und/oder Amphibien und/oder Arten der wirbellosen Tiere dienen. Dabei umfasst das Habitat einen ein Aufnahmevolumen 2 definierenden portablen Aufnahmekörper 3. In der dargestellten Ausführungsform ist der Aufnahmekörper 3 beispielhaft in Form eines, eine rechteckige Grundfläche aufweisenden Quaders dargestellt.

In der dargestellten Ausführungsform weist der Aufnahmekörper 3 eine Länge 21 und eine Breite 22 auf. Ferner kann der Aufnahmekörper eine Höhe 23 der Wandungsabschnitte 7 aufweisen. Die Gesamthöhe des, insbesondere kastenartigen, Aufnahmekörpers 3 wird durch die Summe der Höhe 23 der Wandungsabschnitte 7 und der Höhe 24 des Bodenabschnitts 9 gebildet. Dabei kann das Verhältnis von Länge 21 zu Breite 22 einen Faktor von mindestens 1,25, bevorzugt von mindestens 1,5, besonders bevorzugt von mindestens 1,75, höchst bevorzugt von mindestens 2,0, aufweisen. Der Wandungsabschnitt 7 kann beispielsweise eine Wandhöhe 24 von mindestens 20 cm, bevorzugt von mindestens 30 cm, besonders bevorzugt von mindestens 35 cm, höchst bevorzugt von mindestens 39 cm, aufweisen.

Der Aufnahmekörper 3 kann wie in den Figuren beispielhaft dargestellt, aus einer ersten, aus wenigstens einem Wandungsabschnitt 7 gebildeten Wandungsstruktur und aus einer wenigstens einen Bodenabschnitt 9 bildenden Bodenstruktur gebildet sein. Die Boden- und/oder Wandungsstruktur kann beispielsweise einen rahmenartigen Aufbau, insbesondere aus profilartigen oder profilförmigen Bauteilen gebildet, aufweisen. Die Boden- und Wandungsstruktur kann vermittels einer kraft- und/oder stoff- und/oder formschlüssigen Verbindung miteinander verbunden sein, insbesondere sind die Boden- und die Wandungsstruktur miteinander verschweißt.

Selbstverständlich kann der Aufnahmekörper 3 auch eine von der gezeigten Form abweichende geometrische Form aufweisen, z. B. fünfeckig, sechseckig, achteckig, usw.

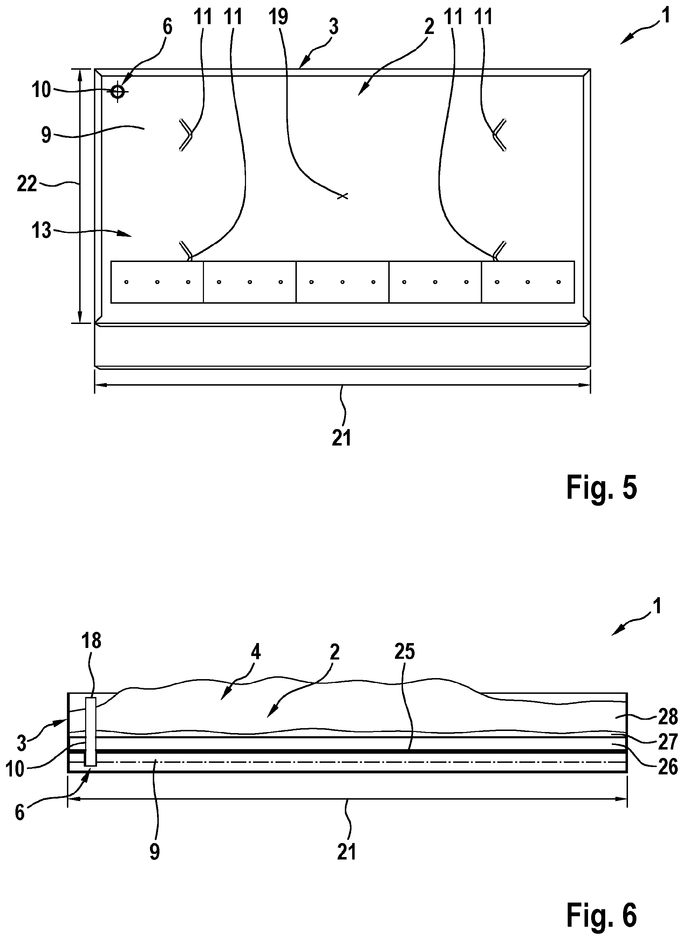

In das Aufnahmevolumen 2 des Habitats 1 wird in dem Aufnahmevolumen 2 zumindest abschnittsweise, insbesondere vollständig, ein Füllmaterial 4 (s. Figur 6) aufgenommen, wobei der Aufnahmekörper 3 eingerichtet ist, insbesondere im mit dem Füllmaterial 4 befüllten Zustand, einen auf natürliche Gegebenheiten und/oder Bedürfnisse der Reptilien und/oder Amphibien und/oder Arten der wirbellosen Tiere angepassten Lebensraum auszubilden. Dabei ist der Aufnahmekörper 3 eingerichtet, im mit Füllmaterial 4 befüllten Zustand von einem Herstellungsort zu einem Nutzungsort 5 transportiert zu werden. Damit kann der Aufnahmekörper 3 beispielsweise vermittels eines Krans von einem Herstellungsort auf ein Fahrzeug aufgeladen, vermittels dem Fahrzeug zum Nutzungsort verbracht und wiederum über einen Kran von dem Fahrzeug auf dem Nutzungsort platziert werden. Mit anderen Worten ist der Aufnahmekörper 3 derart beschaffen, dass dieser sein Eigengewicht sowie das in dessen Aufnahmevolumen 2 aufgenommene Füllmaterial 4 tragen kann, sodass während eines, insbesondere krangestützten, Anhebens des Aufnahmekörpers 3 dieser zerstörungsfrei bewegt werden kann.

Durch die Verwendung von witterungsbeständigem Material zur Ausbildung des Aufnahmekörpers 3, kann dieser einen ersten Zeitraum an einem ersten Nutzungsort verbleiben, z. B. an dem ersten Nutzungsort auf einem erdigen Untergrund abgestellt werden, und nach dem ersten Zeitraum, insbesondere im mit Füllmaterial 4 befüllten Zustand, angehoben und zu einem zweiten Nutzungsort verbracht werden, wobei das Habitat 1 an beiden Nutzungsorten als Habitat 1 für eine Zieltier dienen kann bzw. dient. Beispielsweise kann, nachdem an dem ersten Nutzungsort ein Zieltier das Habitat 1 bewohnt, durch Befüllen des Aufnahmekörpers 3 mit einer Flüssigkeit, insbesondere mit Wasser, dieses Zieltier (z. B. Reptilien) aus dem Habitat 1 vertrieben werden, da das Zieltier beispielsweise keine Flüssigkeit in dem von ihm bewohnten Habitat 1 wünscht. Das Befüllen des Aufnahmevolumens 2 mit einer Flüssigkeit, insbesondere mit Wasser, kann beispielsweise als kurzfristige und/oder temporärer Prozess dienen, um das Füllmaterial 4 - also etwaige Hohlräume der Substrate oder das Substratmaterial selbst - im Aufnahmevolumen 2 zumindest teilweise oder vollständig, für eine Zeit zu durchdringen und/oder zu umschließen. Damit kann es erreicht werden, dass in dem Substrat befindliche Zieltiere zum Verlassen des Habitats 1 bewegen werden können. Im nächsten Schritt kann die Flüssigkeit 4 aus dem Aufnahmevolumen 2 des Aufnahmekörper 3 abgelassen werden, um das Gewicht des Habitats 1 zu reduzieren und/oder um das Habitat 1 bzw. dessen Füllmaterial 4 für eine erneute Bewohnung durch ein Zieltier attraktiv zu stellen. Durch ein nachfolgendes Anheben des mit Füllmaterial 4 befüllten und von der Flüssigkeit zumindest teilweise befreiten Habitats 1 kann dieses auf ein Transportfahrzeug gesetzt und an einen zweiten Nutzungsort verbracht werden.

Die Befüllung des Aufnahmevolumens 2 kann zumindest abschnittsweise, bevorzugt überwiegend, besonders bevorzugt vollständig, einen Schichtaufbau bzw. einen geschichteten Aufbau aufweisen. Das Aufnahmevolumen 2 wird von einem Boden 25 begrenzt. Eine erste, dem Boden 25 unmittelbar zugewandte bzw. auf dem Boden 25 unmittelbar aufliegende Schicht 26 kann ein Material umfassen, welches eine Flüssigkeitsspeichereigenschaft und/oder eine Flüssigkeitsabführeigenschaft aufweist. Dieses Speichermaterial bzw. Drainagematerial kann beispielsweise einen aus profiliertem Kunststoff gebildeten Einsatz umfassen.

Eine zweite Schicht 27 kann beispielsweise, insbesondere unmittelbar, auf der ersten Schicht 26 angeordnet sein, wobei die zweite Schicht 27 als Schutz- und/oder Trennlage für die erste Schicht 26 ausgebildet ist, sodass vermittels der zweiten Schicht 27 die erste Schicht 26 von einer dritten, auf der zweiten Schicht 27 angeordneten Schicht 28 trennbar ist. Beispielsweise ist die zweite Schicht 27 aus einem Geotextil, insbesondere einem Geovlies, und/oder aus einem Geogitter ausgebildet. Dabei ist das für die zweite Schicht 27 verwendete Geotextil und/oder Geogitter flüssigkeitsdurchlässig, sodass die Flüssigkeit durch das Geotextil bzw. das Geogitter hindurch zu der ersten Schicht 26 gelangen kann. In der Figur 6 gezeigten Ausführungsform weist die zweite Schicht 27 eine unterschiedliche Dicke auf. Alternativ kann die zweite Schicht 27 zumindest abschnittsweise, bevorzugt überwiegend, besonders bevorzugt gänzlich, eine konstante Dicke aufweisen.

Es ist optional möglich, dass eine, insbesondere unmittelbar, auf der zweiten Schicht 27 angeordnete dritte Schicht 28 vorgesehen ist, wobei die dritte Schicht 28 z. B. aus einem Schüttgut gebildet wird. Die dritte Schicht 28 kann beispielsweise eine filterstabile Eigenschaft aufweisen, d. h., dass vorliegende Zwischenräume in der dritten Schicht 28 über den zeitlichen Verlauf und insbesondere während Witterungseinflüssen erhalten bleiben. Die dritte Schicht 28 kann beispielsweise zumindest teilweise, insbesondere überwiegend, aus einem Material gebildet sein, welches einen überwiegenden Anteil mit einer Korngröße im Korngrößenbereich von 90 mm bis 250 mm aufweist. Dieser Korngrößenbereich ermöglicht die Ausbildung von für das mobile Habitat vorteilhafter Lücken und Zwischenräume. Alternativ oder zusätzlich kann das die dritte Schicht 28 bildende Material frei von Setzungen sein und/oder eine wasserfeste Eigenschaft, d. h. z. B. eine bei Wassereinwirkung formstabile Eigenschaft, und/oder eine nährstoffarme Eigenschaft aufweisen.

Auf der dritten Schicht 28 kann beispielsweise wenigstens eine Nisthilfestruktur und/oder wenigstens ein Nahrungshabitat für Zieltiere des mobilen Habitats angeordnet sein.

Die, das Tonschiefermaterial, insbesondere das Porlith, umfassende (dritte) Schicht 28 kann beispielsweise eine Schichtdicke von mindestens 10 cm, bevorzugt von mindestens 15 cm, besonders bevorzugt von mindestens 20 cm, höchst bevorzugt von mindestens 25 cm, aufweisen. Die erste Schicht 26, welche eine Flüssigkeitsdrainagefunktion und/oder eine Flüssigkeitsabführfunktion innehat kann beispielsweise eine Mindestschichtdicke von 3 cm, bevorzugt von 4 cm, besonders bevorzugt von 5 cm, aufweisen und/oder eine Maximalschichtdicke von maximal 15 cm, bevorzugt von 12 cm, besonders bevorzugt von 10 cm, höchst bevorzugt von 9 cm, aufweisen. Die als Trennschicht zwischen der ersten und dritten Schicht 26, 28 angeordnete zweite Schicht 27 (Trennschicht) kann beispielsweise eine Schichtdicke im Bereich von 0,05 cm bis 1,0 cm, bevorzugt von 0,1 cm bis 0,5 cm, aufweisen.

Der Aufnahmekörper 3 ist eingerichtet, das Aufnahmevolumen 2 flüssigkeitsdicht zu umschließen, sodass zumindest temporär eine Flüssigkeit in dem Aufnahmevolumen 2 des Aufnahmekörper 3 aufnehmbar ist. Mit Umschließen ist gemeint, dass der Aufnahmekörper 3 eine Art flüssigkeitsdichte Wanne bildet, welche ein Aufnahmevolumen 2 zur Aufnahme und zum Halten der Flüssigkeit, insbesondere eines Wassers, dient.

Der Aufnahmekörper 3 kann eine verschließbare Ablassöffnung 6 aufweisen, welche ein zumindest überwiegendes, bevorzugt ein vollständiges, Ablassen einer in dem Aufnahmevolumen 2 des Aufnahmekörpers 3 aufgenommenen Flüssigkeit ermöglicht. In der in Figur 1 gezeigten Ausführungsform kann die Ablassöffnung 6 als eine am Bodenabschnitt 9 des Aufnahmekörpers 3 ausgebildete Öffnung vorgesehen sein, wobei hierbei die Ablassöffnung 6 durch die Überlaufeinrichtung 10 verschlossen wird. Dabei kann bereits eine Verlängerung der Durchtrittsöffnung der Ablassöffnung 6 für ein Verschließen der Ablassöffnung 6 verstanden werden, sodass eine eine Flüssigkeit aus dem Aufnahmevolumen ablassende Öffnung damit auf ein Höhenniveau verlegt wird, welches es ermöglicht, ein definiertes Volumen an Flüssigkeit innerhalb des Aufnahmevolumens 2 des Aufnahmekörpers 3 aufzunehmen bzw. zu halten. Das Öffnen der Ablassöffnung 6 kann beispielsweise durch das Entfernen der Überlaufeinrichtung 10 von dem Aufnahmekörper 3 oder durch ein Freigeben bzw. Öffnen einer tieferliegenden Öffnung (nicht dargestellt) der Überlaufeinrichtung 10 erreicht werden, sodass in dem Aufnahmevolumen 2 aufgenommene Flüssigkeit über die Ablassöffnung 6 aus dem Aufnahmevolumen 2 abfließen kann. Selbstverständlich kann die Ablassöffnung 6 auch über eine separates Verschlusselement temporär verschlossen werden.

Der Aufnahmekörper 3 umfasst einen Wandungsabschnitt 7 zur zumindest abschnittsweisen Ausbildung des Aufnahmevolumens 2, wobei zumindest ein Wandungsteilabschnitt 8 bewegbar oder lösbar an wenigstens einem weiteren Wandungsabschnitt 7 und/oder einem Bodenabschnitt 9 des Aufnahmekörpers 3 verbunden ist. Der Wandungsteilabschnitt 8 ist in der Ausführungsform der Figuren 2 bis 5 als Klappe ausgebildet, welche im geöffneten Zustand als Ablassöffnung 6 das Aufnahmevolumen 2 zum überwiegenden oder vollständigen Ablassen einer etwaigen, in dem Aufnahmevolumen 2 befindlichen Flüssigkeit freigibt.

Der Aufnahmekörper 3 kann eine Überlaufeinrichtung 10 aufweisen, die eingerichtet ist, die ein vordefiniertes Volumen übersteigende, in dem Aufnahmevolumen 2 aufgenommene Flüssigkeit abzuführen. Eine obere Öffnung 18 der Überlaufeinrichtung 10 bildet dabei das Höhenniveau, welches maximal für die in dem Aufnahmevolumen 2 aufgenommene Flüssigkeit ermöglicht wird. Die Überlaufeinrichtung 10 kann optional (nicht dargestellt) hinsichtlich des vordefinierten Volumens der Flüssigkeit veränderbar sein, z. B. wird hierbei die Eintrittsöffnung bzw. oberen Öffnung 18 der Überlaufeinrichtung 10 relativ zu dem Flüssigkeitspegel in dem Aufnahmevolumen 2 verändert bzw. eingestellt. Vorzugsweise ist die Überlaufeinrichtung 10 als rohrartiger bzw. rohrförmiger Körper ausgebildet. Besonders bevorzugt ist der Rohrkörper zumindest abschnittsweise, insbesondere im Bereich seiner oberen Öffnung 18 von den Randbereichen, insbesondere von Wandungsabschnitten 7 beabstandet.

Der Aufnahmekörper 3 kann beispielsweise zumindest abschnittsweise, insbesondere vollständig, aus Metall, bevorzugt zumindest abschnittsweise, insbesondere aus Aluminium oder Stahl, ausgebildet sein.

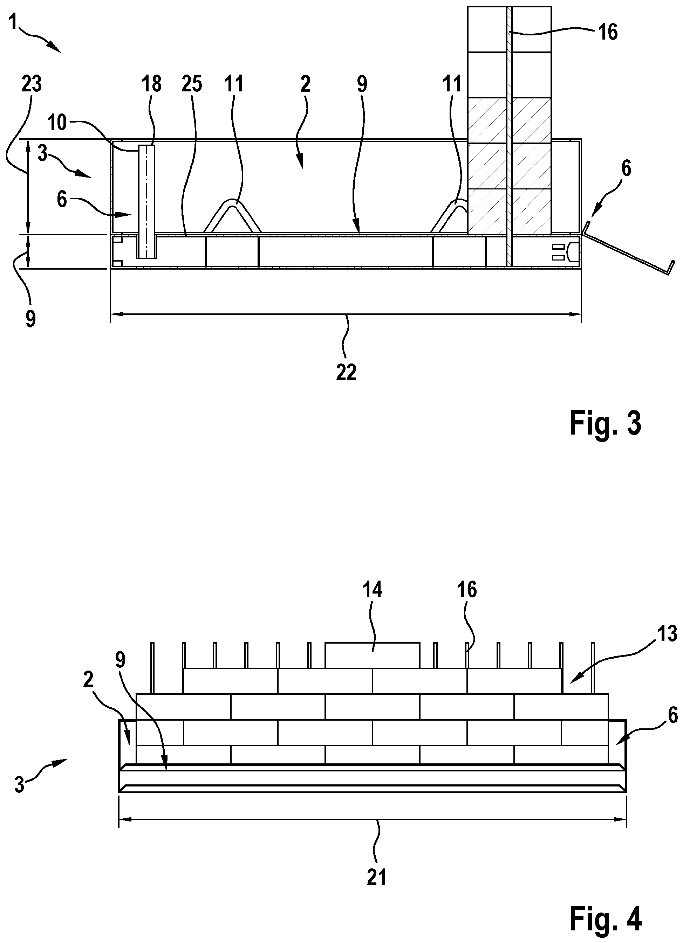

Der Aufnahmekörper 3 kann beispielsweise wenigstens ein Anschlussmittel 11 als Schnittstelle zur Verbindung mit einem Hebezeug, insbesondere einem Anschlagmittel eines Hebezeugs, umfassen, um den Aufnahmekörper 3 vermittels des Anschlussmittels 11 in Verbindung mit einem Anschlagmittel bzw. mit dem Hebezeug zu heben und/oder zu bewegen. Wie insbesondere in einer Zusammenschau der Figuren 1 und 3 zu erkennen, kann der Aufnahmekörper 3 insbesondere vier Anschlussmittel 11 umfassen, welche bevorzugt im gleichen Abstand zu einem geometrischen Zentrum 19 und/oder zu einem Schwerpunkt des Aufnahmekörpers 3 angeordnet oder ausgebildet sind. Alternativ oder zusätzlich sind die Anschlussmittel 11 derart an dem Aufnahmekörper 3 verteilt, dass beim Heben des Aufnahmekörpers 3 dieser horizontal verlagert werden kann. D. h. z. B., dass der Aufnahmekörper 3 über die Anschlussmittel 11 ohne ein Ausschütten von in dem Aufnahmevolumen 2 aufgenommenen Füllmaterial 4, z. B. vermittels eines Krans, bewegbar ist. Der Aufnahmekörper 3 kann optional einen Wandungs- und/oder einen Wandungsteil- und/oder Bodenabschnitt 7, 8, 9 zur Ausbildung des Aufnahmevolumens 2 umfassen, wobei das Anschlussmittel 11 in oder an einem Wandungs- und/oder Wandungsteil- und/oder Bodenabschnitt 7, 8, 9 angeordnet oder ausgebildet, insbesondere angeschweißt oder angeschraubt, ist.

Der Aufnahmekörper 3 ist derart dimensioniert, dass dieser, insbesondere eine viereckige und/oder rechteckige, Grundfläche von 1,5 bis 32,0 m², bevorzugt von 2,5 bis 25,0 m², besonders bevorzugt von 6,0 bis 11,0 m², höchst bevorzugt von 7,0 bis 9,0 m² aufweist.

Um die Attraktivität des Habitats für die Zieltierart zu steigern, kann der Aufnahmekörper 3 beispielsweise wenigstens eine Anbauschnittstelle 12 zur Verbindung mit einer im bestimmungsgemäßen Gerbrauch des Aufnahmekörpers 3 sich vertikal erstreckenden Baustruktur 13 aufweisen. Die Baustruktur 13 kann als Anbau verstanden werden, der z. B. eine Unterschlupfstruktur für die Zieltierart oder für typische Beutetiere der Zieltierart darstellt. Bevorzugt ist die Baustruktur 13 mit der Anbauschnittstelle 12 im Endmontagezustand des Habitats formschlüssig und/oder stoffschlüssig und/oder kraftschlüssig verbunden. Die Baustruktur 13 kann beispielsweise als Mauer ausgebildet sein. Beispielsweise ist die Mauer zumindest abschnittsweise aus porösen Mauersteinen und/oder aus zumindest abschnittsweise auf Lücke verlegten Mauersteinen ausgebildet. Die poröse Struktur und/oder die Lücken der Mauersteine können als Rückzugsort für Zieltiere, insbesondere für Insekten, des mobilen Habitats dienen.

Wie in der in den Figuren 2 bis 5 gezeigten und mit einer Klappe (hier: Wandungsteilabschnitt 8) versehenen Ausführungsform ersichtlich, kann die Baustruktur 13 beispielsweise zumindest abschnittsweise, bevorzugt überwiegend, besonders bevorzugt vollständig, entlang der Erstreckung der Klappe verlaufen und/oder im klappenseitigen Randbereich der Grundfläche bzw. des Bodenabschnitts 9 und/oder parallel zur Klappe angeordnet oder ausgebildet sein. Die Klappe bzw. der Wandungsteilabschnitt 8 kann z. B. über ein Scharnier beweglich mit weiteren Bestandteilen des Aufnahmekörpers 3, insbesondere mit dem Bodenabschnitt 9 des Aufnahmekörpers, verbunden sein. Die ausgeklappte Klappe bzw. der ausgeklappte Wandungsteilabschnitt kann beispielsweise als Rampe bzw. als Eintrittsbereich verwendet werden und dabei einen Höhenunterschied einer Aufstellfläche 18 zu dem Bodenniveau 19 des Aufnahmekörpers 3 verbinden. Dies erhöht ferner die Akzeptanz und Attraktivität des Habitats 1, da der Zieltierart das Eintreten in das Aufnahmevolumen erleichtert wird.

In den Figuren 2 bis 4 ist der, mit einer ausklappbaren Klappe versehene Aufnahmekörper 3 in einem ersten Nutzungszustand dargestellt, welcher dazu dient, die Zieltierart zu einem Aufsuchen dieses Habitats 1 zu bewegen bzw. die Annahme des Habitats 1 als Verweil- oder Lebensraum zu maximieren. In einem weiteren Nutzungszustand (nicht dargestellt) wird die zum Aufnahmevolumen weisende Öffnung (z. B. Ablauföffnung 6) durch die Klappe und/oder durch ein anderweites Element (z. B. Verschlussmittel) zumindest temporär verschlossen, sodass eine in das Aufnahmevolumen 2 eingebrachte Flüssigkeit nicht ablaufen kann und damit die Flüssigkeit in dem Aufnahmevolumen 2 gehalten wird. Diese Befüllung bzw. Flutung des Aufnahmevolumens 2 mit Flüssigkeit verändert die Attraktivität bzw. die Akzeptanz des Habitats 1 für die Zieltierart, sodass in der Regel davon auszugehen ist, dass die Zieltierart das Habitat 1 verlässt bzw. hiervon abwandert.

Die Baustruktur 13 kann beispielsweise wenigstens einen mit einem Verbindungselement 15 versehenen Baukörper 14 umfassen, wobei der Baukörper 14 über das Verbindungselement 15 formschlüssig mit einem am Aufnahmekörper 3 angeordneten oder ausgebildeten Verbindungsmittel 16 zur Ausbildung einer formschlüssigen Verbindung zusammenwirkt. Beispielsweise sind die Baukörper 14 mit wenigstens einer Ausnehmung, insbesondere mit wenigstens einem Durchbruch, versehen, durch welchen zumindest ein aufnahmekörperseitig angeordnetes oder ausgebildetes, insbesondere stabförmiges, Verbindungsmittel 16 eingreift bzw. durchgreift.

Die Baustruktur 13 kann beispielsweise als, insbesondere scheibenartige, Wand 17 ausgebildet sein, bevorzugt verläuft die, insbesondere scheibenartige, Wand 17 wenigstens abschnittsweise, insbesondere vollständig, entlang eines Seitenbereichs und/oder einer Klappe des Aufnahmekörpers 3. Die Baustruktur 13 kann vorzugsweise eine Höhe 20 aufweisen, die mindestens 0,30 m, bevorzugt mindestens 0,50 m, besonders bevorzugt mindestens 0,75 m, höchst bevorzugt mindestens 0,90 m, beträgt. Alternativ oder zusätzlich kann die Baustruktur 13 eine Höhe 20 von maximal 2,5 m, bevorzugt maximal 1,5 m, besonders bevorzugt maximal 1,1 m, aufweisen.

Das in dem Aufnahmevolumen 2 aufgenommene Füllmaterial 4 umfasst zumindest teilweise, bevorzugt mindestens zu 10 Gew.-%, besonders bevorzugt mindestens zu 20 Gew.-%, höchst bevorzugt mindestens zu 35 Gew.-%, weiter bevorzugt mindestens zu 50 Gew.-%, ein Material aus Tonschiefer, insbesondere aus Porlith. Das in dem Aufnahmevolumen 2 aufgenommene Füllmaterial 4 weist wenigstes - (a) eine erste Schicht 26 auf, welche eine Flüssigkeitsaufnahmefähigkeit von mindestens 8 l/m², bevorzugt von mindestens 10 l/m², besonders bevorzugt von mindestens 11 l/m², höchst bevorzugt von mindestens 12 l/m² und/oder eine Flüssigkeitsableitfähigkeit bei einem Gefälle von 2 % von mindestens 1,0 I/(s*m), bevorzugt von mindestens 1,3 I/(s*m), besonders bevorzugt von mindestens 1,4 I/(s*m), höchst bevorzugt von mindestens 1,5 I/(s*m), aufweist und/oder (b) eine dritte Schicht (28) auf, welche zumindest teilweise Tonschiefer, insbesondere Porlith, enthält und/oder (c) eine zweite Schicht 27 auf, welche zwischen der ersten Schicht 26 und der dritten Schicht 28 angeordnet ist und diese voneinander trennt.

Neben dem Habitat 1 umfasst die Erfindung ein Verfahren zur Ansiedlung oder Umsiedlung von Reptilien und/oder Amphibien und/oder Arten der wirbellosen Tiere, umfassend ein Platzieren eines Habitats 1, insbesondere eines hierin beschriebenen Habitats 1, an einem Nutzungsort 5, wobei das Habitat 1 ein von einem Aufnahmekörper 3 gebildetes Aufnahmevolumen 2 umfasst. In dieses Aufnahmevolumen 2 ist zumindest teilweise, insbesondere vollständig, ein Füllmaterial 4 aufgenommen, wobei der mit dem Füllmaterial 4 befüllte Aufnahmekörper 3 einen auf natürliche Gegebenheiten und/oder Bedürfnisse der Reptilien und/oder Amphibien und/oder Arten der wirbellosen Tiere angepassten Lebensraum ausbildet.

Bevorzugt kann zu einem definierten bzw. wählbaren Zeitpunkt ein Befüllen des Aufnahmevolumens 2 des Habitats 1 mit einer Flüssigkeit derart erfolgen, dass das Aufnahmevolumen 2 zumindest teilweise, bevorzugt überwiegend, besonders bevorzugt vollständig, mit der Flüssigkeit gefüllt ist. Hierzu kann vorzugsweise zu einem definierten bzw. wählbaren Zeitpunkt vor dem Befüllen mit der Flüssigkeit ein Verschließen einer Ablauföffnung 6 des Aufnahmevolumens 2, welche im geöffneten Zustand zu einem zumindest teilweisen, bevorzugt überwiegenden, besonders bevorzugt vollständigen, Abfließen von in dem Aufnahmevolumen 2 befindlichen Flüssigkeit, z. B. schwerkraftbedingt, führt, erfolgen. Mit anderen Worten kann ein Verschließen einer verschließbaren Ablassöffnung 6 des Aufnahmekörpers 3, insbesondere vermittels eines Verschlussmittels, vor dem Befüllen des Aufnahmevolumens 2 des Habitats 1 mit der Flüssigkeit erfolgen. Das Befüllen des Aufnahmevolumens 2 des Habitats 1 mit der Flüssigkeit kann beispielsweise nach dem Platzieren des Habitat 1 an dem Nutzungsort 5 ausgeführt werden. Ebenso kann das Habitat 1 in einer ersten, insbesondere zeitlich ausgedehnteren, Phase mit einer offenen Ablauföffnung 6 an dem Nutzungsort 5 platziert sein. In einer zweiten Phase wird die Ablauföffnung 6 verschlossen und damit die Möglichkeit der haltenden Aufnahme von Flüssigkeit in dem Aufnahmevolumen 3 eröffnet bzw. gegeben.

Vor dem Platzieren des Habitats 1 an dem Nutzungsort 5 kann das Habitat 1 beispielsweise an einem Herstellungsort mit Füllmaterial 4 befüllt werden. Bevorzugt erfolgt ein Anwachsen von biologischem Material in oder an dem Füllmaterial 4 an dem Herstellungsort. So kann es sich als vorteilhaft erweisen, die Lagerungsphase des Habitats 1 an dem Herstellungsort auf wenigstens eine Woche, vorzugsweise auf mehrere Monate, auszudehnen, um ein gezieltes Anwachsen von biologischem Material, insbesondere von Pflanzen, in einer einfacher zu überwachenden und/oder einfacher zu beeinflussenden und/oder in einer geschützten Umgebung (z. B. Pflanzhalle und/oder Gewächshaus) zu ermöglichen. Mit anderen Worten kann an dem Herstellungsort eine Kultivierung von einem gewünschten biologischen Material, insbesondere Pflanzen, in dem mit Füllmaterial versehenen Aufnahmekörper ausgeführt werden.

In einem weiteren optionalen Verfahrensschritt kann ein Aufbau einer Baustruktur 13 an dem Aufnahmekörper 3 ausgeführt werden. Hierbei kann der Aufbau der Baustruktur vermittels einer formschlüssigen und/oder kraftschlüssigen und/oder stoffschlüssigen Verbindung eines Baukörpers 14 der Baustruktur 13 an dem Aufnahmekörper 3 erfolgen. Über ein baukörperseitiges Verbindungselement 15 kann beispielsweise mit einem aufnahmekörperseitig angeordneten oder ausgebildeten Verbindungsmittel 16 eine formschlüssige Verbindung eingegangen werden, damit die Baustruktur 13 fest und/oder steif an dem Aufnahmekörper 3 fixiert ist. Alternativ oder zusätzlich erfolgt der Aufbau der Baustruktur 13 zumindest abschnittsweise, bevorzugt überwiegend, besonders bevorzugt vollständig, an dem Aufnahmekörper 3 nach einem Platzieren des Habitats 1 an einem Nutzungsort 5 und damit an dem Nutzungsort 5.

Auch kann ein Verfahren ausgeführt werden, das zunächst ein Platzieren des mit einem Füllmaterial 4 befüllten Aufnahmekörpers 3 an einem ersten Nutzungsort vorsieht. Danach, insbesondere nach einem Zeitraum, z. B. nach mindestens 2 Wochen, bevorzugt nach mindestens 4 Wochen, besonders bevorzugt nach mindestens 3 Monaten, höchst bevorzugt nach mindestens 12 Monaten, kann ein zumindest teilweises, bevorzugt überwiegendes, besonders bevorzugt vollständiges, Befüllen des Aufnahmevolumens 2 des an dem ersten Nutzungsort befindlichen Aufnahmekörpers 3 mit einer Flüssigkeit, insbesondere mit Wasser, erfolgen. Beispielsweise wird vor dem Befüllen des Aufnahmevolumens 2 eine optionale aufnahmekörperseitige Ablauföffnung 6 verschlossen. Durch ein Befüllen, insbesondere ein Fluten des Aufnahmekörpers 3 kann z. B. zumindest eine Zieltierart aus dem Aufnahmevolumen 2 vertrieben werden. Nachdem zumindest die Zieltierart das Habitat 1 verlassen hat, kann ein Verlagern des mit dem Füllmaterial 4 befüllten Aufnahmekörpers 3 von dem ersten Nutzungsort an einen zweiten, von dem ersten Nutzungsort beabstandeten Nutzungsort, erfolgen, wobei bevorzugt die Verlagerung erst ausgeführt wird, nachdem ein Ablassen der in dem Aufnahmevolumen 2 befindlichen Flüssigkeit zumindest teilweise, bevorzugt überwiegend, besonders bevorzugt vollständig, erfolgte. An dem zweiten Nutzungsort kann wiederum ein Zieltier in und/oder auf das Habitat 1 gelockt werden und nach einem Zeitraum durch erneutes Befüllen des Aufnahmevolumens 2 mit einer Flüssigkeit vertrieben werden und das mobile Habitat 1 an einen weiteren Nutzungsort wieder verwendet werden.

Die Überlaufeinrichtung 10 kann beispielsweise derart ausgebildet sein, dass deren oberes Ende 18 unterhalb eines oberen Endes des wenigstens einen Wandungsabschnitts 7, insbesondere sämtlicher Wandungsabschnitte 7, angeordnet ist. Alternativ ist das untere Ende bzw. die Ablauföffnung 6 der Überlaufeinrichtung 10 derart angeordnet oder ausgebildet, dass diese gegenüber einem unteren Ende des mobilen Habitats 1, insbesondere einem unteren Ende eines Bodenabschnitts des Habitats 1, zurückversetzt ist. Dadurch, dass die Ablauföffnung 6 gegenüber dem unteren Ende des mobilen Habitats 1 zurückversetzt ist, ist die Ablauföffnung 6 trotz Abstellen des mobilen Habitats auf einer ebenen Aufstellfläche durch den Rückversatz freiliegend, sodass eine in der Überlaufeinrichtung befindliche Flüssigkeit sicher ablaufen kann, vgl. Figur 6.

### BEZUGSZEICHENLISTE

- 1: Habitat
- 2: Aufnahmevolumen
- 3: Aufnahmekörper
- 4: Füllmaterial
- 5: Nutzungsort
- 6: Ablassöffnung
- 7: Wandungsabschnitt von 3
- 8: Wandungsteilabschnitt von 3
- 9: Bodenabschnitt von 3
- 10: Überlaufeinrichtung
- 11: Anschlussmittel
- 12: Anbauschnittstelle
- 13: Baustruktur
- 14: Baukörper
- 15: Verbindungselement von 14
- 16: Verbindungsmittel von 3
- 17: (scheibenartige) Wand
- 18: obere Öffnung von 10
- 19: Zentrum
- 20: Höhe von 13
- 21: Länge von 7
- 22: Breite von 7
- 23: Höhe von 7
- 24: Höhe von 9
- 25: Boden
- 26: erste Schicht
- 27: zweite Schicht
- 28: dritte Schicht

## Patentansprüche

1. Habitat (1) für Reptilien und/oder Amphibien und/oder Arten der wirbellosen Tiere, umfassend einen ein Aufnahmevolumen (2) definierenden portablen Aufnahmekörper (3), wobei das Habitat (1) ein Füllmaterial (4) umfasst und im bestimmungsgemäßen Gebrauch des Habitats (1) in dem Aufnahmevolumen (2) zumindest abschnittsweise, insbesondere vollständig, das Füllmaterial (4) aufgenommen ist, wobei der Aufnahmekörper (3) eingerichtet ist, im mit dem Füllmaterial (4) befüllten Zustand, einen auf natürliche Gegebenheiten und/oder Bedürfnisse der Reptilien und/oder Amphibien und/oder Arten der wirbellosen Tiere angepassten Lebensraum auszubilden, wobei der Aufnahmekörper (3) eingerichtet ist, im mit Füllmaterial (4) befüllten Zustand von einem Herstellungsort zu einem Nutzungsort (5) transportiert zu werden, wobei der Aufnahmekörper (3) eingerichtet ist, das Aufnahmevolumen (2) flüssigkeitsdicht zu umschließen, sodass zumindest temporär eine Flüssigkeit in dem Aufnahmevolumen (2) des Aufnahmekörper (3) aufnehmbar ist, wobei der Aufnahmekörper (3) eine Grundfläche von mindestens 1,5 m² aufweist und der Aufnahmekörper (3) derart beschaffen ist, dessen Eigengewicht sowie das in dessen Aufnahmevolumen (2) aufgenommene Füllmaterial (4) zu tragen, sodass während eines Anhebens des Aufnahmekörpers dieser zerstörungsfrei bewegbar ist, wobei der Aufnahmekörper (3) einen Wandungsabschnitt (7) zur zumindest abschnittsweisen Ausbildung des Aufnahmevolumens (2) umfasst, und zumindest ein Wandungsteilabschnitt (8) bewegbar oder lösbar an wenigstens einem weiteren Wandungsabschnitt (7) und/oder einem Bodenabschnitt (9) des Aufnahmekörpers (3) verbunden ist, **dadurch gekennzeichnet, dass** zur Ausbildung einer verschließbaren Ablassöffnung (6) der Wandungsteilabschnitt (8) als Klappe oder als lösbarer Wandungsteilabschnitt (8) ausgebildet ist.

2. Habitat (1) nach Anspruch 1, **dadurch gekennzeichnet, dass** der Aufnahmekörper (3) eine verschließbare Ablassöffnung (6) aufweist, welche ein zumindest überwiegendes, bevorzugt ein vollständiges, Ablassen einer in dem Aufnahmevolumen (2) des Aufnahmekörpers (3) aufgenommenen Flüssigkeit ermöglicht.

3. Habitat (1) nach einem der vorhergehenden Ansprüche, **dadurch gekennzeichnet, dass** der Aufnahmekörper (3) eine Überlaufeinrichtung (10) aufweist, die eingerichtet ist, die ein vordefiniertes Volumen übersteigende, in dem Aufnahmevolumen (2) aufgenommene Flüssigkeit abzuführen, insbesondere ist die Überlaufeinrichtung (10) hinsichtlich des über sie abzuführenden vordefinierten Volumens der Flüssigkeit veränderbar.

4. Habitat (1) nach einem der vorhergehenden Ansprüche, **dadurch gekennzeichnet, dass** der Aufnahmekörper (3) zumindest abschnittsweise, insbesondere vollständig, aus Metall, bevorzugt zumindest abschnittsweise, insbesondere aus Aluminium oder Stahl, ausgebildet ist.

5. Habitat (1) nach einem der vorhergehenden Ansprüche, **dadurch gekennzeichnet, dass** der Aufnahmekörper (3) wenigstens ein Anschlussmittel (11) als Schnittstelle zur Verbindung mit einem Hebezeug, insbesondere einem Anschlagmittel eines Hebezeugs, umfasst, um den Aufnahmekörper (3) vermittels des Anschlussmittels (11) in Verbindung mit dem Anschlagmittel bzw. mit dem Hebezeug zu heben und/oder zu bewegen.

6. Habitat (1) nach einem der vorhergehenden Ansprüche, **dadurch gekennzeichnet, dass** der Aufnahmekörper (3) eine, insbesondere viereckige, Grundfläche von mindestens 2,5 m², bevorzugt von mindestens 6,0 m², besonders bevorzugt von mindestens 7,0 m², aufweist.

7. Habitat (1) nach einem der vorhergehenden Ansprüche, **dadurch gekennzeichnet, dass** der Aufnahmekörper (3) wenigstens eine Anbauschnittstelle (12) zur Verbindung mit einer im bestimmungsgemäßen Gerbrauch des Aufnahmekörpers (3) sich vertikal erstreckenden Baustruktur (13) aufweist, bevorzugt ist die Baustruktur (13) mit der Anbauschnittstelle (12) formschlüssig verbunden oder verbindbar.

8. Habitat (1) nach einem der vorhergehenden Ansprüche, **dadurch gekennzeichnet, dass** das in dem Aufnahmevolumen (2) aufgenommene Füllmaterial (4) zumindest teilweise, bevorzugt mindestens zu 10 Gew.-%, besonders bevorzugt mindestens zu 20 Gew.-%, höchst bevorzugt mindestens zu 35 Gew.-%, weiter bevorzugt mindestens zu 50 Gew.-%, ein Material aus Tonschiefer, insbesondere aus Porlith, umfasst.

9. Habitat (1) nach einem der vorhergehenden Ansprüche, **dadurch gekennzeichnet, dass** das in dem Aufnahmevolumen (2) aufgenommene Füllmaterial (4) wenigstes
- eine erste Schicht (26) aufweist, welche eine Flüssigkeitsaufnahmefähigkeit von mindestens 8 l/m², bevorzugt von mindestens 10 l/m², besonders bevorzugt von mindestens 11 l/m², höchst bevorzugt von mindestens 12 l/m² und/oder eine Flüssigkeitsableitfähigkeit bei einem Gefälle von 2 % von mindestens 1,0 I/(s*m), bevorzugt von mindestens 1,3 I/(s*m), besonders bevorzugt von mindestens 1,4 I/(s*m), höchst bevorzugt von mindestens 1,5 I/(s*m), aufweist und/oder
- eine dritte Schicht (28) aufweist, welche zumindest teilweise Tonschiefer, insbesondere Porlith, enthält und/oder
- eine erste Schicht (26) aufweist, welche eine Flüssigkeitsaufnahmefähigkeit von mindestens 8 l/m², bevorzugt von mindestens 10 l/m², besonders bevorzugt von mindestens 11 l/m², höchst bevorzugt von mindestens 12 l/m² und/oder eine Flüssigkeitsableitfähigkeit bei einem Gefälle von 2 % von mindestens 1,0 I/(s*m), bevorzugt von mindestens 1,3 I/(s*m), besonders bevorzugt von mindestens 1,4 I/(s*m), höchst bevorzugt von mindestens 1,5 I/(s*m), aufweist und eine dritte Schicht (28) aufweist, welche zumindest teilweise Tonschiefer, insbesondere Porlith, enthält und eine zweite Schicht (27) aufweist, welche zwischen der ersten Schicht (26) und der dritten Schicht (28) angeordnet ist und diese voneinander trennt.

10. Verfahren zur Ansiedlung und/oder Umsiedlung von Reptilien und/oder Amphibien und/oder Arten der wirbellosen Tiere umfassend ein Platzieren eines Habitats (1) nach einem der Ansprüche 1 bis 9, an einem Nutzungsort (5), wobei das Habitat (1) ein von einem Aufnahmekörper (3) gebildetes Aufnahmevolumen (2) umfasst, in welchem zumindest teilweise, insbesondere vollständig, ein Füllmaterial (4) aufgenommen ist und der mit dem Füllmaterial (4) befüllte Aufnahmekörper (3) einen auf natürliche Gegebenheiten und/oder Bedürfnisse der Reptilien und/oder Amphibien und/oder Arten der wirbellosen Tiere angepassten Lebensraum ausbildet.

11. Verfahren nach Anspruch 10, **gekennzeichnet durch** Befüllen des Aufnahmevolumens (2) des Habitats (1) mit einer Flüssigkeit derart, dass das Aufnahmevolumen (2) zumindest teilweise, bevorzugt überwiegend, besonders bevorzugt vollständig, mit der Flüssigkeit gefüllt ist.

12. Verfahren nach Anspruch 10 oder 11, **gekennzeichnet durch,** Verschließen einer verschließbaren Ablassöffnung (6) des Aufnahmekörpers (3) vor dem Befüllen des Aufnahmevolumens (2) des Habitats (1) mit der Flüssigkeit, bevorzugt erfolgt das Befüllen des Aufnahmevolumens (2) des Habitats (1) nach dem Platzieren des Habitats (1) an dem Nutzungsort (5).

13. Verfahren nach einem der Ansprüche 10 bis 11, **gekennzeichnet durch** die Verfahrensschritte
- Platzieren des mit einem Füllmaterial (4) befüllten Aufnahmekörpers (3) an einem ersten Nutzungsort;
- Befüllen des Aufnahmevolumens (2) des an dem ersten Nutzungsort befindlichen Aufnahmekörpers (3) mit einer Flüssigkeit, insbesondere mit Wasser;
- Verlagern des mit dem Füllmaterial (4) befüllten Aufnahmekörpers (3) von dem ersten Nutzungsort an einen zweiten, von dem ersten Nutzungsort beabstandeten Nutzungsort, nach einem Ablassen der in dem Aufnahmevolumen (2) befindlichen Flüssigkeit.

## Claims

1. Habitat (1) for reptiles and/or amphibians and/or species of invertebrates, comprising a portable receiving body (3) defining a receiving volume (2), wherein the habitat (1) comprises a filling material (4) and, in the intended use of the habitat (1), is included in the receiving volume (2) at least in sections, in particular completely, the filling material (4), wherein the receiving body (3) is set up to be transported from a place of production to a place of use (5) in the state filled with fillingmaterial (4), wherein the receiving body (3) is set up to enclose the receiving volume (2) fluid tightly so that at least temporarily a liquid in the receiving volume (2) of the receiving body (3) is receptive,wherein the receiving body (3) has a base area of at least 1.5 m2 and d it receiving body (3) is such that its own weight as well as the in its receiving volume (2) absorbed filling material (4) to bear, so that during a lifting of the receiving body it is non-destructivelymovable , wherein the receiving body (3) comprises a wall portion (7) for at least sectional formation of the receiving volume (2), and at least one wall portion (8) movable or detachable is connected to at least one further wall portion (7) and / or a floor portion (9) of the receiving body (3), **characterized in that** zur formation of a lockable outlet opening (6) of the wall portion (8) is formed as a flap or as a detachable wall portion (8).

2. Habitat (1) according to claim 1, **characterized in that** the receiving body (3) has a lockable drain opening (6), which enables an at least predominant, preferably a complete, draining of a liquid absorbed in the receiving volume (2) of the receiving body (3).

3. Habitat (1) according to one of the preceding claims, **characterized in that** the receiving body (3) has an overflow device (10) which is set up to discharge the liquid exceeding a predefined volume, absorbed in the receiving volume (2), in particular the overflow device (10) with respect to the predefined volume of the liquid to be discharged via it is changeable.

4. Habitat (1) according to one of the preceding claims, **characterized in that** the receiving body (3) is formed at least in sections, in particular completely, of metal, preferably at least in sections, in particular of aluminum or steel.

5. Habitat (1) according to one of the preceding claims, **characterized in that** the receiving body (3) comprises at least one connecting means (11) as an interface to the connection with a lifting device, in particular a lifting device of a lifting device, to lift and / or move the receiving body (3) by means of the connecting means (11) in connection with the lifting device or with the lifting device.

6. Habitat (1) according to one of the preceding claims, **characterized in that** the receiving body (3) has a, in particular square, base area of at least 2.5 m2, preferably of at least 6.0 m2, particularly preferably of at least 7.0 m2.

7. Habitat (1) according to one of the preceding claims, **characterized in that** the receiving body (3) has at least one mounting interface (12) for connection with a building structure (13) extending vertically in the intended use of the receiving body (3), preferably the building structure (13) with the mounting interface (12) is positively connected or connectable.

8. Habitat (1) according to one of the preceding claims, **characterized in that** the filler material (4) absorbed in the receiving volume (2) comprises at least partially, preferably at least to 10 wt .-%, particularly preferably at least to 20 wt .-%, most preferably at least to 35 wt .-%, further preferably at least to 50 wt .-%, a material of clay slate, in particular of porlith.

9. Habitat (1) according to any one of the preceding claims, **characterized in that** the filling material (4) absorbed in the receiving volume (2) is at least
- has a first layer (26) which has a liquid absorption capacity of at least 8 I/m2, preferably of at least 10 I/m2, particularly preferably of at least 11 I/m2, most preferably of at least 12 I/m2 and/or a liquid discharge capability at a gradient of 2 % of at least 1.0 I/(s*m), preferably of at least 1.3 I/(s*m), particularly preferably of at least 1.4 I/(s*m), most preferably of at least 1.5 I/(s*m), and/or
- has a third layer (28) containing at least partial clay slate, in particular porlith, and/or
- has a first layer (26) which has a liquid absorption capacity of at least 8 I/m2, preferably of at least 10 I/m2, particularly preferably of at least 11 I/m2, most preferably of at least 12 I/m2 and/or a liquid discharge capability at a slope of 2 % of at least 1.0 I/(s*m), preferably of at least 1.3 I/(s*m), particularly preferably of at least 1.4 I/(s*m), most preferably of at least 1.5 I/(s*m), and has a third layer (28) which contains at least partial clay slate, in particular porlith, and has a second layer (27) which is arranged between the first layer (26) and the third layer (28) and separates them from each other.

10. Method for the settlement and/or relocation of reptiles and/or amphibians and/or species of the invertebrates comprising a placement of a habitat (1) according to one of claims 1 to 9, at a place of use (5), wherein the habitat (1) comprises a receiving volume (2) formed by a receiving body (3), in which at least partially, in particular completely, a filling material (4) is absorbed and the receiving body (3) filled with the filling material (4) forms a habitat adapted to the natural circumstances and/or needs of the reptiles and/or amphibians and/or species of the invertebrates.

11. The method of claim 10, **characterized by** filling the absorption volume (2) of the habitat (1) with a liquid such that the absorption volume (2) is at least partially, preferably predominantly, particularly preferably completely, filled with the liquid.

12. The method of claim 10 or 11, **characterized by** closing a lockable drain opening (6) of the receiving body (3) before filling the receiving volume (2) of the habitat (1) with the liquid, preferably filling the receiving volume (2) of the habitat (1) after placing the habitat (1) at the place of use (5).

13. Method according to any one of claims 10 to 11, **characterized by** the method steps
- placing the receiving body (3) filled with a filling material (4) at a first place of use;
- filling the receiving volume (2) of the receiving body (3) located at the first place of use with a liquid, in particular water;
- Relocation of the receiving body (3) filled with the filling material (4) from the first place of use to a second place of use separated from the first place of use, after draining the liquid in the receiving volume (2).

## Revendications

1. Habitat (1) pour les reptiles et/ou les amphibienset/ou les espèces d'invertébrés , comprenant un corps d'accueil portable définissant un volume d'accueil (2) (3), dans lequel l'habitat (1) comprend un matériau de rembourrage (4) et, dans le cadre de l'utilisation normale de l'habitat (1), est inclus dans le volume d'accueil (2) au moins par tranches, en particulier complètement, le matériau de rembourrage (4), dans lequel le corps d'accueil (3) est équipé pour être transporté d'un lieu de fabrication à un lieu d'utilisation (5), dans un état rempli de matériau de rembourrage (4),dans lequel le corps d'accueil (3) est équipé pour enfermer le volume d'accueil (2) de manière étanche aux liquides, de sorte qu'au moins temporairement un liquide soit absorbé dans le volume d'accueil (2) du corps d'accueil (3),où l'élément de frappe (3) a une surface au sol d'au moins 1,5 m2 et où l'élément de frappe (3) est conçu de manière à supporter son propre poids ainsi que le matériau de remplissage (4) incorporé dans son volume d'absorption (2), de sorte que, lors d'un levage de l'élément de frappe, celui-ci est mobile de manière non destructive, où l'élément de frappe (3) comprend une section de paroi (7) pour la formation au moins partielle du volume d'absorption (2) et au moins une section de paroi (8) est mobile ou soluble sur au moins une autre section de paroi (7) et/ou une section de sol (9) de l'élément de frappe (3), **caractérisée en ce que**, par la formation d'une ouverture de vidange refermable (6),la section de paroi (8) est formée en tant que volet ou section de paroi amovible (8).

2. Habitat (1) selon la revendication **1, caractérisé en ce que** l'élément d'absorption (3) présente un orifice de vidange refermable (6) qui permet une vidange au moins prédominante, de préférence complète, d'un liquide absorbé dans le volume d'absorption (2) de l'élément d'absorption (3).

3. Habitat (1) selon l'une quelconque des revendications précédentes, **caractérisé en ce que** l'absorbeur (3) dispose d'un dispositif de trop-plein (10) installé pour évacuer un liquide dépassant un volume prédéfini absorbé dans le volume d'absorption (2), en particulier le dispositif de trop-plein (10) est modifiable en ce qui concerne le volume prédéfini de liquide à évacuer sur celui-ci.

4. Habitat (1) selon l'une quelconque des revendications précédentes, **caractérisé en ce que** le corps de réception (3) est formé au moins par sections, en particulier complètes, en métal, de préférence au moins par sections, en particulier en aluminium ou en acier.

5. Habitat (1) selon l'une quelconque des revendications précédentes, **caractérisé en ce que** l'élément de fixation (3) comprend au moins un moyen de raccordement (11) en tant qu'interface avec un appareil de levage, en particulier un moyen d'ancrage d'un appareil de levage, pour soulever et/ou déplacer l'élément de fixation (3) par l'intermédiaire du moyen de raccordement (11) en liaison avec l'élément de fixation ou l'appareil de levage.

6. Habitat (1) selon l'une quelconque des revendications précédentes, **caractérisé en ce que** le corps de réception (3) a une surface de base, en particulier carrée, d'au moins 2,5 m2, de préférence d'au moins 6,0 m2, de préférence d'au moins 7,0 m2.

7. Habitat (1) selon l'une quelconque des revendications précédentes, **caractérisé en ce que** le corps de fixation (3) possède au moins une interface d'extension (12) pour être relié à une structure de construction (13) s'étendant verticalement dans l'usage prévu du corps de fixation (3), la structure de construction (13) est de préférence reliée à l'interface d'extension (12) de manière cohérente par la forme ou peut être reliée.

8. Habitat (1) selon l'une quelconque des revendications précédentes, **caractérisé en ce que** le matériau de remplissage (4) inclus dans le volume d'absorption (2) comprend au moins partiellement, de préférence au moins 10 % en poids, de préférence au moins 20 % en poids, de préférence au moins 35 % en poids, de préférence au moins 50 % en poids, un matériau d'ardoise, en particulier de porlite.

9. Habitat (1) selon l'une quelconque des revendications précédentes, **caractérisé en ce que** le matériau de remplissage (4) absorbé dans le volume d'absorption (2) est le moins
- une première couche (26) ayant une capacité d'absorption des liquides d'au moins 8 l/m2, de préférence d'au moins 10 l/m2, de préférence d'au moins 11 l/m2, de préférence d'au moins 12 l/m2 et/ou une capacité de dissipation des liquides à une pente de 2 % d'au moins 1,0 l/(s*m), de préférence d'au moins 1,3 l/(s*m), de préférence d'au moins 1,4 l/(s*m), de préférence d'au moins 1,5 l/(s*m), et/ou
- une troisième couche (28) contenant au moins partiellement de l'ardoise, en particulier de la porlite, et/ou
- une première couche (26) ayant une capacité d'absorption de liquide d'au moins 8 l/m2, de préférence d'au moins 10 l/m², de préférence d'au moins 11 I/m2, de préférence d'au moins 12 l/m2 et/ou une capacité de dissipation de liquide à une pente de 2 % d'au moins 1,0 l/(s*m), de préférence d'au moins 1,3 l/(s*m), de préférence d'au moins 1,4 l/(s*m), de préférence d'au moins 1,5 l/(s*m), et une troisième couche (28) contenant au moins une partie d'ardoise, en particulier de porlith, et une deuxième couche (27) disposée entre la première couche (26) et la troisième couche (28) et la séparant l'une de l'autre.

10. Procédé d'implantation et/ou de relocalisation de reptiles et/ou d'amphibiens et/ou d'espèces d'invertébrés comprenant un placement d'un habitat (1) selon l'une quelconque des revendications 1 à 9, dans un lieu d'utilisation (5), dans lequel l'habitat (1) comprend un volume d'accueil (2) formé par un corps d'accueil (3) dans lequel au moins une partie, en particulier l'intégralité, d'un matériau de remplissage (4) est incluse et le corps d'accueil (3) rempli du matériau de remplissage (4) forme un habitat adapté aux conditions naturelles et/ou aux besoins des reptiles et/ou des amphibiens et/ou des espèces d'invertébrés.

11. Procédé selon la revendication 10, caractérisé en remplissant le volume d'absorption (2) de l'habitat (1) avec un liquide de telle sorte que le volume d'absorption (2) soit rempli du liquide au moins partiellement, de préférence de manière prédominante, de préférence particulièrement complète.

12. Procédé selon la revendication 10 ou 11, **caractérisé par** la fermeture d'un orifice de vidange refermable (6) du corps d'accueil (3) avant le remplissage du volume d'accueil (2) de l'habitat (1) avec le liquide, de préférence le remplissage du volume d'accueil (2) de l'habitat (1) après le placement de l'habitat (1) sur le lieu d'utilisation (5).

13. Procédé selon l'une quelconque des revendications 10 à 11, **caractérisé par** les étapes du procédé
- placer l'élément de réception (3) rempli d'un matériau de remplissage (4) dans un premier lieu d'utilisation;
- remplir d'un liquide, en particulier d'eau, le volume (2) de l'absorbeur (3) situé au premier lieu d'utilisation;
- Déplacement de l'élément d'absorption (3) rempli du matériau de remplissage (4) du premier lieu d'utilisation vers un second lieu d'utilisation éloigné du premier lieu d'utilisation, après écoulement du liquide contenu dans le volume d'absorption (2).
